# EUROPÄISCHE PATENTANMELDUNG

(11) **EP 4 056 010 A1**
(43) Veröffentlichungstag der Anmeldung: **14.09.2022**
(21) Anmeldenummer: 21209507.9
(22) Anmeldetag: 22.11.2021
(51) Int. Cl.: A01B 71/02, A01B 79/00, G06F 3/0482

(54) **VERFAHREN ZUM BETREIBEN EINER LANDWIRTSCHAFTLICHEN MASCHINENANORDNUNG**

(30) Priorität: 08.03.2021 DE 102021105550
(71) Anmelder: CLAAS Tractor S.A.S., 78141 Vélizy-Villacoublay Cedex (FR)
(72) Erfinder: Wieckhorst, Jan Carsten, 29525 Uelzen Orsteil Hanstedt 2 (DE); Ehlert, Christian, 33719 Bielefeld (DE); Birkmann, Christian, 33775 Versmold (DE); Pieper, Jona, 59394 Nordkirchen (DE); Ober, Martin, 78736 Trichtingen (DE); Pflanze, Sascha, 88348 Bad Saulgau (DE); Noyer, Pierre, 49074 Osnabrück (DE); Göldner, Martin, 72477 Schwenningen (DE); Fugunt, Michael, 88410 Bad Wurzach (DE)
(74) Vertreter: CLAAS Gruppe

(57) **Zusammenfassung**

Die vorliegende Erfindung betrifft ein Verfahren zum Betreiben einer landwirtschaftlichen Maschinenanordnung (1), bestehend aus zumindest einer landwirtschaftlichen Arbeitsmaschine (2) und zumindest einem an die Arbeitsmaschine (2) adaptierten Anbaugerät (3, 4), wobei der Betrieb der Maschinenanordnung (1) durch ein Fahrerassistenzsystem (21) optimiert wird, welches über eine Recheneinheit (22) und zumindest eine Bedien- und Anzeigeeinheit (20, 23) verfügt, und wobei die Arbeitsmaschine (2) und/oder das zumindest eine Anbaugerät (3, 4) eine Steuereinrichtung (19, 28) umfassen, wobei das Fahrerassistenzsystem (21) so strukturiert ist, dass ein Arbeitsmaschineneinstellautomat (30) und ein Anbaugeräteeinstellautomat (31) gebildet werden, wobei die jeweiligen Einstellautomaten (30, 31) in Abhängigkeit voneinander eine Optimierung der Arbeitsweise der Arbeitsmaschine (2) und des zumindest einen Anbaugerätes (3, 4) bewirken, wobei durch das Fahrerassistenzsystem (21) ein ausführbares Modul "Strategie" (38) und ein Modul "Einstellungen" (39) bereitgestellt wird, wobei die Ausführbarkeit des Moduls "Strategie" (38) in Abhängigkeit von der zumindest einmaligen Ausführung des Moduls "Einstellungen" (39) bewirkt wird.

## Beschreibung

Die vorliegende Erfindung betrifft ein Verfahren zum Betreiben einer landwirtschaftlichen Maschinenanordnung gemäß dem Oberbegriff des Anspruches 1.

Eine landwirtschaftliche Maschinenanordnung besteht aus zumindest einer landwirtschaftlichen Arbeitsmaschine und zumindest einem an die Arbeitsmaschine adaptierten Anbaugerät. Bei der landwirtschaftlichen Arbeitsmaschine handelt es sich insbesondere um einen Traktor. Die landwirtschaftliche Arbeitsmaschine weist zur Einstellung von Betriebsparametern angesteuerte Arbeitsaggregate auf, beispielsweise Antriebsmotor, Getriebe, Hydrauliksystem, Nebenabtrieb, Hubwerk, Fahrwerk und dergleichen mehr. Das Anbaugerät weist eine Schnittstelle zur Adaption, d.h. Ankopplung oder Anhängung, an die Arbeitsmaschine auf. Das Anbaugerät kann beispielsweise als Ladewagen, Schwader, Wender, Mähwerk, Ballenpresse, Bodenbearbeitungsgerät, Düngerstreuer oder Feldspritze ausgeführt sein. Das Anbaugerät wird von der Arbeitsmaschine mitgeführt und vielfach auch angetrieben. Der Arbeitsmaschine und dem Anbaugerät ist gemeinsam, dass für deren Betrieb zumindest eine Steuereinrichtung notwendig ist, mittels der die Arbeitsmaschine und/oder das Anbaugerät gesteuert oder geregelt werden. Der Betrieb der Maschinenanordnung wird durch ein Fahrerassistenzsystem optimiert, welches über eine Recheneinheit und zumindest eine Bedien-und Anzeigeeinheit verfügt. Durch das Fahrerassistenzsystem wird es einer Bedienperson ermöglicht, Betriebsparameter bzw. Einstellparameter der Maschinenanordnung vorzugeben. Für den zu optimierenden Betrieb der Maschinenanordnung ist es notwendig, dass die Bedienperson wesentliche Grundeinstellungen an der Arbeitsmaschine und dem Anbaugerät selbsttätig vornimmt, wobei eine Steuereinrichtung der Arbeitsmaschine bzw. des Anbaugerätes selbst oder eine jeweilige Bedienungsanleitung, soweit verfügbar, die Vornahme der Grundeinstellungen nur bedingt unterstützen. Die Grundeinstellungen bilden die Ausgangsbasis der späteren Optimierung im laufenden Betrieb der Maschinenanordnung, wofür eine besondere Sorgfalt notwendig ist. Voraussetzung ist dabei ein umfassendes Wissen der Bedienperson über die vielfältigen und vielfach komplexen Zusammenhänge bei der Grundeinstellung der Maschinenanordnung, was aufgrund der Vielfalt an unterschiedlichen Arbeitsmaschinen und Anbaugeräten und der sich daraus ergebenden Kombinationsmöglichkeiten nur mit sehr hohem Aufwand vermittelbar ist.

Es ist daher Aufgabe der Erfindung eine Maschinenanordnung der eingangs genannten Art weiterzubilden, welche die beschriebenen Nachteile vermeidet, indem die Bedienperson bei der Einstellung der Maschinenanordnung unterstützt wird.

Diese Aufgabe wird erfindungsgemäß durch ein Verfahren zum Betreiben einer landwirtschaftlichen Maschinenanordnung gemäß dem Oberbegriff des Anspruches 1 in Verbindung mit den kennzeichnenden Merkmalen des Anspruches 1 gelöst. Vorteilhafte Weiterbildungen sind Gegenstand der Unteransprüche.

Gemäß dem Anspruch 1 wird Verfahren zum Betreiben einer landwirtschaftlichen Maschinenanordnung, bestehend aus zumindest einer landwirtschaftlichen Arbeitsmaschine, welche zur Einstellung von Betriebsparametern der Arbeitsmaschine angesteuerte Arbeitsaggregate aufweist, und zumindest einem an die Arbeitsmaschine adaptierten Anbaugerät, welches eine Schnittstelle zur Adaption an die Arbeitsmaschine aufweist, wobei der Betrieb der Maschinenanordnung durch ein Fahrerassistenzsystem optimiert wird, welches über eine Recheneinheit und zumindest eine Bedien- und Anzeigeeinheit verfügt, und wobei die Arbeitsmaschine und/oder das zumindest eine Anbaugerät eine Steuereinrichtung umfassen, mittels der die Arbeitsmaschine und/oder das Anbaugerät gesteuert oder geregelt werden. Erfindungsgemäß ist das Fahrerassistenzsystem so strukturiert, dass ein Arbeitsmaschineneinstellautomat und ein Anbaugeräteeinstellautomat gebildet werden, wobei die jeweiligen Einstellautomaten in Abhängigkeit voneinander eine Optimierung der Arbeitsweise der Arbeitsmaschine und des zumindest einen Anbaugerätes bewirken, wobei durch das Fahrerassistenzsystem ein ausführbares Modul "Strategie" und ein Modul "Basiseinstellung Maschinenanordnung" bereitgestellt wird, wobei die Ausführbarkeit des Moduls "Strategie" in Abhängigkeit von der zumindest einmaligen Ausführung des Moduls "Einstellungen" bewirkt wird. Die Einstellautomaten bewirken eine effiziente und beschleunigte Optimierung der Arbeitsweise der jeweiligen Maschinenanordnung in Abhängigkeit von dem Modul "Strategie", wobei durch die Abhängigkeit von der vorherigen, zumindest einmaligen Ausführung des Moduls "Einstellungen" sichergestellt wird, dass die hierfür notwendige Einstellung der jeweiligen Maschinenanordnung als Basis für die Optimierung der Arbeitsweise bereits optimiert durchgeführt wird.

Bevorzugt kann mit der Aktivierung des Fahrerassistenzsystems automatisch das Modul "Einstellungen" aktiviert werden. Damit kann der Bedienperson eine Art Kontrollmöglichkeit eröffnet werden, um beispielsweise die Einstellparameter einer bestehenden Maschinenkombination zu überprüfen. Insbesondere können Änderungen in der Konfiguration einer bestehenden Maschinenanordnung angepasst werden, welche wiederum Auswirkungen auf die Optimierung im Rahmen der Ausführung des Moduls "Strategie" haben können. Die Einstellung der Maschinenanordnung bei der Ausführung des Moduls "Einstellungen" erfolgt dabei in einem "Schritt für Schritt"-Dialog mittels der zumindest einen Bedien- und Anzeigeeinheit. Die zumindest eine Bedien- und Anzeigeeinheit kann als eine in einer Kabine der Arbeitsmaschine angeordnete Bedien- und Anzeigeeinheit ausgeführt sein oder als eine zusätzliche Bedien- und Anzeigeeinheit, insbesondere als Teil einer mobilen Datenverarbeitungsvorrichtung wie einem Mobilfunktelefon oder einem Tablet, welche die Bedienperson außerhalb der Maschinenanordnung mit sich führen kann. Letztere hat den Vorteil, dass durch das Fahrerassistenzsystem zusätzliche Handlungsanweisungen in Form von einzelnen Bildern oder sequentiellen Bildfolgen darstellbar sind, um von der Bedienperson durchzuführende manuelle Einstell- und /oder Anbauvorgänge zwecks Erläuterung zu visualisieren. Die Aktivierung des Fahrerassistenzsystems kann automatisch mit der Inbetriebnahme der Maschinenanordnung respektive der Arbeitsmaschine erfolgen oder durch eine manuelle Aktivierung durch die Bedienperson.

Das Modul "Einstellungen" kann Einzelmodule "Maschinendaten", "Basiseinstellungen" und "Arbeitsziel" umfassen. Bevorzugt kann vorgesehen sein, dass eine Auswahl des Moduls "Strategie" sowie der Einzelmodule "Basiseinstellungen" und "Arbeitsziel" unabhängig von dem Einzelmodul "Maschinendaten" durchführbar ist. Hierzu können innerhalb der Module Plausibilitätsanfragen vorgesehen sein, die prüfen, ob eine Maschinenanordnung ausgewählt oder angelegt wurde.

Insbesondere kann die Abarbeitung des Moduls "Strategie" und des Moduls "Einstellungen" mittels eines interaktiven natürlichsprachigen Dialogs zwischen einer Bedienperson der Maschinenanordnung und dem Fahrerassistenzsystem durchgeführt werden. Hierdurch wird die Abarbeitung der Module vereinfacht und für eine Bedienperson nachvollziehbarer, die mit der einzustellenden Maschinenanordnung nicht vertraut ist.

Vorteilhaft ist es, wenn durch das Modul "Einstellungen" eine Übersicht von einzelmodulspezifischen Einstellschritten der Maschinenanordnung aus der Gruppe "Gerätedetails", "Arbeitsbedingungen", "Reifeneinstellung", "Ballastierungsempfehlung", "Reifendruckempfehlung", "Ernteguttyp", "Vorbereitung auf dem Hof", "Vorbereitung auf dem Feld", "Arbeitsstrategieeinstellungen", "Gerätedetails", "Aufgabe", "Typ", "Ankuppelpunkt und Ankuppelart", "Gewichtsbestimmung", "Ausrüstung des Anbaugerätes" vorgegeben wird.. Durch diese Strukturierung kann eine bessere Übersichtlichkeit der innerhalb des Moduls "Einstellungen" respektive der Einzelmodule "Maschinendaten", "Basiseinstellungen" und "Arbeitsziel" abzuarbeitenden Verfahrensschritte erreicht werden. Eine insbesondere weniger versierte Bedienperson wird somit nicht durch die Fülle an Einstellparametern, die wegen der jeweiligen Komplexität von Arbeitsmaschine und Anbaugerät stark variieren kann, überfordert.

Dabei kann als ein Verfahrensschritt des Moduls "Einstellungen" eine Konfiguration des Anbaugerätes bestimmt werden, insbesondere durch das Einzelmodul "Maschinendaten".

Weiterhin können als ein Verfahrensschritt des Moduls "Einstellungen" der Einsatzbereich des Anbaugerätes und die Einsatzkonditionen bestimmt werden. Bevorzugt kann dazu eine Abfrage zur Bestimmung eines landwirtschaftlichen Arbeitsauftrages durch das Fahrerassistenzsystem durchgeführt werden. In Kenntnis des durchzuführenden Arbeitsauftrages kann im Rahmen der Einstellung der Maschinenanordnung Einfluss auf die Optimierung der durch das Fahrerassistenzsystem vorgeschlagenen Einstellparameter genommen werden. So können die Einstellautomaten spezifische Einflüsse berücksichtigen, die aus in der Recheneinheit hinterlegtem technischem und agronomischen Wissen bekannt sind. Der jeweilige Einsatzbereich des Anbaugerätes variiert in Abhängigkeit vom Typ des Anbaugerätes. So weist ein als Pflug oder Scheibenmähwerk ausgeführtes Anbaugerät einen anderen Einsatzbereich auf bzw. unterliegt anderen Einsatzkonditionen als beispielsweise ein als Ladewagen mit Pick-up ausgeführtes Anbaugerät zur Aufnahme von Schwad.

Des Weiteren können als ein Verfahrensschritt des Moduls "Einstellungen" Einstellparameter bestimmt werden, die vor dem Erreichen eines abzuarbeitenden Feldes eingestellt werden, und dass als ein Verfahrensschritt des Moduls "Einstellungen" Einstellparameter bestimmt werden, die auf einem abzuarbeitenden Feld eingestellt werden. Der Einstellschritt "Vorarbeiten auf der Hofstätte" sowie der Einstellschritt "Vorarbeiten auf dem Feld" des Moduls "Einstellungen" umfassen Einstellparameter, die für die gesamte Dauer des Arbeitseinsatzes unverändert bleiben. Dabei kann durch die Unterscheidung zwischen dem Einstellschritt "Vorarbeiten auf der Hofstätte" und dem Einstellschritt "Vorarbeiten auf dem Feld" berücksichtigt werden, welche Einstellparameter, neben einem erforderlichen manuellen Eingriff durch die Bedienperson, zusätzlich Hilfsmittel herangezogen werden müssen, die lediglich auf der Hofstätte verfügbar sind.

So kann als ein Verfahrensschritt des Moduls "Einstellungen" das Anlegen einer neuen und/oder das Auswählen einer bestehenden Maschinenanordnung als ein Einstellparameter durchgeführt werden. Dies kann beispielsweise durch Abgleich mit einer in der Recheneinheit des Fahrerassistenzsystems hinterlegten Datenbank oder durch Kommunikation mit einer externen Datenbank, beispielsweise eines externen Farm-Management-Systems oder eines sonstigen Datenverarbeitungssystems, erfolgen. Hierzu kann die Bedienperson aus einer daraus resultierenden vorgegebenen Auswahl die spezifischen Angaben auswählen. Alternativ oder zusätzlich ist es denkbar, dass das Fahrerassistenzsystem mittels eines standardisierten Kommunikationssystems, wie dem ISO-Bus, die spezifischen Angaben zum Hersteller und dem Typ des zumindest einen Anbaugerätes automatisch bestimmt. Gemäß einer bevorzugten Weiterbildung können die Arbeitsmaschine und das zumindest eine an dieser adaptierte Anbaugerät eine ISO-basierte Steuereinrichtung umfassen, die den Arbeitsmaschineneinstellautomaten und den Anbaugeräteeinstellautomaten bilden, die von dem Fahrerassistenzsystem angesteuert werden.

Bei der Ausführung des Modul "Einstellungen" als Grundeinstellung der neu angelegten oder ausgewählten bestehenden Maschinenanordnung können spezifische Angaben zu dem zumindest einen Anbaugerät als Einstellparameter abgefragt werden, insbesondere durch das Einzelmodul "Arbeitsziel".

Wesentlich ist bei diesem Verfahren, dass die Abläufe bei der Ausführung des Moduls "Einstellungen" bzw. von dessen Einzelmodulen "Maschinendaten", "Basiseinstellungen" und "Arbeitsziel" unabhängig von einer jeweiligen Konfiguration der Maschinenanordnung für die Bedienperson reproduzierbar und wiedererkennbar sind.

Hierzu können als spezifische Angaben der Hersteller und der Typ des zumindest einen Anbaugerätes abgefragt werden. Die Angaben können von der Bedienperson im Dialog mit dem Fahrerassistenzsystem durch eine Eingabe von Daten oder eine Auswahl aus vorhandenen Informationen zu Herstellern und Typen von Anbaugeräten eingegeben werden. Anhand der Angaben zu Hersteller und Typ des zumindest einen Anbaugerätes kann, wie weiter oben bereits ausgeführt, ein Abgleich mit einer in der Recheneinheit des Fahrerassistenzsystems hinterlegten Datenbank oder durch Kommunikation mit einer externen Datenbank, beispielsweise eines externen Farm-Management-Systems oder eines sonstigen Datenverarbeitungssystems, durchgeführt werden.

Weiterhin kann in Abhängigkeit vom Typ des zumindest einen Anbaugerätes die Arbeitsbreite des zumindest einen Anbaugerätes, die Art der Schnittstelle zur Adaption an die Arbeitsmaschine, die Position des zumindest einen Anbaugerätes an der Arbeitsmaschine und/oder das Vorhandensein von Zusatzausstattung und die Art der Zusatzausstattung an dem zumindest einen Anbaugerät als Einstellparameter abgefragt werden. Beispielsweise kann die Positionierung des zumindest einen Anbaugerätes an der Arbeitsmaschine im Front-, Seiten- und/oder Heckbereich vorgesehen sein. Unter einer Zusatzausstattung sind an dem jeweiligen Anbaugerät anbringbare Komponenten zu verstehen, welche die Arbeitsweise zumindest des Anbaugerät beeinflussen, und deren Vorhandensein optional ist.

Insbesondere kann als ein Verfahrensschritt des Moduls "Einstellungen" eine Abfrage zur Auswahl eines landwirtschaftlichen Arbeitsauftrages durch das Fahrerassistenzsystem durchgeführt werden. Hierbei kann eine zur Verfügung stehende Auswahl von verschiedenen Arbeitsaufträgen auf Grundlage der angelegten oder ausgewählten Maschinenanordnung durchgeführt werden.

Vorteilhaft kann es sein, dass eine Bestimmung des Standortes und/oder des Betriebszustandes der Maschinenanordnung durchgeführt wird. Im einfachsten Fall kann eine Bestimmung des Standortes durch einen Abfragedialog erfolgen, innerhalb dessen die Bedienperson den Standort sowie den aktuellen Betriebszustand auswählt. Alternativ oder zusätzlich kann eine automatische Standortbestimmung dadurch bewirkt werden, dass der Maschinenanordnung, insbesondere der Arbeitsmaschine, ein GPS-Sender zugeordnet ist, mittels dessen die Position der Maschinenanordnung bestimmbar ist. Eine automatische Bestimmung des aktuellen Betriebszustands der Maschinenanordnung durch das Fahrerassistenzsystem kann alternativ mittels eines durch zumindest ein Sensorsystem erfassten Betriebsparameters eines Arbeitsaggregates der Arbeitsmaschine wie Antriebsmotor, Getriebe oder Nebenabtriebswelle erfolgen. Betriebsparameter können dabei eine bestimmte Fahrgeschwindigkeit, eine Gangwahl oder eine bestimmte Drehzahl der Nebenabtriebswelle sein.

So können in Abhängigkeit vom bestimmten Standort und/oder dem Betriebszustand einzustellende Einstellparameter für die Arbeitsmaschine und/oder das zumindest eine Anbaugerät durch das Fahrerassistenzsystem bestimmt und vorgegeben werden, welche für die Dauer zumindest eines landwirtschaftlichen Arbeitsvorganges unverändert bleiben. Dabei handelt es sich im Speziellen um die Ausführung der Verfahrensschritte des Modules "Einstellungen" einen der Einstellschritte "Vorarbeiten auf der Hofstätte" sowie Einstellschritt "Vorarbeiten auf dem Feld" betreffend.

Weiterhin kann zumindest eine zu erreichende Zielarbeitsweise bei der Verwendung von einer Zusatzausstattung abgefragt und in Abhängigkeit von der Auswahl einer Zielarbeitsweise für die Zusatzausstattung und/oder die Arbeitsmaschine zumindest ein Einstellparameter durch das Fahrerassistenzsystem bestimmt und vorgegeben werden. Beispielhaft kann auf einen Pflug als Anbaugerät verwiesen werden, der zusammen mit einer integrierten oder optionalen Rückverfestigungsvorrichtung als Zusatzausstattung betrieben werden kann, die ihrerseits unterschiedliche Mittel zur Rückverfestigung aufweist, beispielsweise offene Ringe oder geschlossene Walzenringe.

Weiterhin kann eine Aktivierung einer Belegungszuordnung von Funktionen des zumindest einen Anbaugerätes zur Auswahl gestellt werden, wobei bei der Auswahl der Aktivierung die Belegungszuordnung für zumindest eine separate Bedienvorrichtung der Arbeitsmaschine, die mehrere manuell zu betätigende Bedienelemente umfasst, durch das Fahrerassistenzsystem vorgeschlagen werden kann. Dies kann bevorzugt als ein Verfahrensschritt des Modules "Einstellungen" eines der Einstellschritte "Arbeitsauftrag" oder "Vorarbeiten auf dem Feld" betreffend durchgeführt werden.

Bevorzugt können durch die zumindest eine Bedien- und Anzeigeeinheit in einer ersten Bedien- und Anzeigeebene zumindest drei nebeneinander angeordnete Visualisierungsbereiche dargestellt werden, die in der ersten Bedien- und Anzeigeebene hierarchisch absteigend positioniert werden, wobei die Darstellungsgröße des jeweiligen Visualisierungsbereich hierarchisch absteigend zunimmt, und dass in einer zweiten Bedien- und Anzeigeebene die beiden hierarchisch höherstehenden Visualisierungsbereiche durch einen Einstell- und Visualisierungsbereich gemäß einer zuvor im hierarchisch niedrigsten Visualisierungsbereich getroffenen Auswahl überlagert werden, wobei der Einstell- und Visualisierungsbereich der zweiten Bedien- und Anzeigeebene der Auswahl und/oder Einstellung von Einstellparametern dient. Die hierarchisch absteigende Zunahme der Visualisierungsbereiche in der ersten Bedien-und Anzeigeebene bietet mehr Darstellungsraum. Durch das Überlagern der beiden hierarchisch höherstehenden Visualisierungsbereiche durch den Einstell- und Visualisierungsbereich in der zweiten Bedien- und Anzeigeebene wird die Übersichtlichkeit der Auswahl- und/oder Einstellmöglichkeiten von Einstellparametern erhöht. Das Einstellen von Einstellparametern umfasst dabei auch die Eingabe von alphanumerischen Zeichen. Zudem wird dadurch Raum für den natürlichsprachigen Dialog mit dem Fahrerassistenzsystem geschaffen. Der Ausgestaltung der zumindest einen Bedien- und Anzeigeeinheit liegt der Gedanke zu Grunde, ein Bedienkonzept zur Einstellung der Maschinenanordnung bereitzustellen, welches arbeitsmaschinen- und anbaugeräteübergreifend eine schnelle Eingewöhnung und Wiedererkennung des Fahrerassistenzsystems und seiner Bedienung sicherstellt.

Hierzu können die zumindest drei nebeneinander angeordneten Visualisierungsbereiche der ersten Bedien- und Anzeigeebene spaltenförmig positioniert sein. Damit kann aufgrund der Zunahme der Darstellungsgröße des jeweiligen Visualisierungsbereiches innerhalb der Darstellungshierarchie eine mit der sich in der Regel aufweitenden Menüstruktur korrespondierende Anordnung erreicht werden.

Insbesondere kann die Bedien- und Anzeigeeinheit als berührungssensitiver Bildschirm ausgeführt sein, der dazu eingerichtet ist, dass eine Navigation innerhalb und zwischen den Visualisierungsbereichen der ersten Bedien- und Anzeigeebene und dem Einstell- und Visualisierungsbereichen der zweiten Bedien- und Anzeigeebene durch Berührung und/oder Betätigung von Bedienelementen erfolgt, die der Bedien- und Anzeigeeinheit zugeordnet sind. Das Bedienen durch Berühren des berührungssensitiven Bildschirms lässt eine intuitivere Bedienung durch die Bedienperson zu. Insbesondere lassen sich neben punktuellen Berührungen auch Wischgesten für die Bedienung nutzen. Die vorzugsweise zusätzlich vorhandenen und manuell zu betätigenden Bedienelemente bieten eine höhere Flexibilität der Bedienung, insbesondere unter schwierigeren Betriebsbedingungen der Maschinenanordnung, beispielsweise aufgrund von Erschütterungen verursacht durch einen unebenen Untergrund.

Bevorzugt kann der jeweilige Visualisierungsbereich der ersten Bedien- und Anzeigeebene entsprechend seiner hierarchischen Position eine Hauptmenüebene, eine Menüebene oder eine Submenüebene aufweisen. Die Darstellung und Anordnung folgt dabei dem Top-down-Prinzip, d.h. die Hauptmenüebene wird in dem höchsten Visualisierungsbereich dargestellt, die Menüebene in dem hierarchisch darunterliegenden Visualisierungsbereich und die Submenüebene findet sich im hierarchisch niedrigsten Visualisierungsbereich. Hierzu sind in der der ersten Bedien- und Anzeigeebene besonders bevorzugt genau drei Visualisierungsbereiche vorgesehen.

Des Weiteren können die Hauptmenüebene mehrere Hauptmenüpunkte, die Menüebene zumindest einen Menüpunkt und die Submenüebene zumindest einen Submenüpunkt umfassen, die jeweils auswählbar sind. Dabei kann zwischen den zumindest drei Visualisierungsbereichen der ersten Bedien- und Anzeigeebene hin-und hergewechselt werden, wobei sich entsprechend der Auswahl in einem hierarchisch höheren Visualisierungsbereich die Darstellung in den nachfolgenden niedrigeren Visualisierungsbereichen ändert. Dadurch kann vermieden werden, dass die Bedienperson die vollständige Bedienstruktur rekursiv durchlaufen muss,

Bevorzugt kann die Bedien- und Anzeigeeinheit dazu eingerichtet sein, eine innerhalb des jeweiligen Visualisierungsbereiches getroffene Auswahl eines Hauptmenüpunktes, eines Menüpunktes oder eines Submenüpunktes optisch wahrnehmbar als aktiviert hervorzuheben. Hierdurch wird die Orientierung zwischen und innerhalb der Visualisierungsbereiche für die Bedienperson vereinfacht. Dies ist besonders vorteilhaft, wenn die darzustellenden Strukturen von Hauptmenüebene, die Menüebene sowie Submenüebene an Umfang zunehmen. Hierzu kann die Bedien- und Anzeigeeinheit dazu eingerichtet sein, zur Hervorhebung eines aktiven Submenüpunktes im hierarchisch niedrigsten Visualisierungsbereich der ersten Bedien- und Anzeigeebene einen Auswahlindikator in dem hierarchisch nächsthöherstehenden Visualisierungsbereich darzustellen.

Eine für unterschiedliche Konfigurationen von Maschinenanordnungen gleiche Strukturierung der Darstellung, Bedienung und Dialogsteuerung durch das Fahrerassistenzsystem erhöht die Akzeptanz der Bedienperson, den durch das Fahrerassistenzsystem vorgeschlagenen optimierten Einstellparametern zu vertrauen. Insbesondere wird dadurch der Wiederkennungseffekt bei der Bedienung erhöht, wodurch die Bedienperson die jeweilige Einstellung der Maschinenanordnung mittels des Fahrerassistenzsystems effizienter durchführen kann. Die Bedienperson agiert sich in einem vereinheitlichten Bedienumfeld, so dass sie sich unabhängig von den jeweils aktiven Arbeitsmaschineneinstellautomaten und Anbaugeräteeinstellautomaten der jeweiligen Maschinenanordnung schnell zurechtfindet.

Die eingangs gestellte Aufgabe wird zudem durch eine landwirtschaftliche Maschinenanordnung gemäß dem nebengeordneten Anspruch 20 gelöst. Auf alle Ausführungen zu dem vorschlagsgemäßen Verfahren zum Betreiben der landwirtschaftlichen Maschinenanordnung darf verwiesen werden.

Die vorliegende Erfindung wird nachstehend anhand eines in den Zeichnungen dargestellten Ausführungsbeispieles näher erläutert.

Es zeigen:
- Fig. 1: eine Draufsicht auf eine Maschinenanordnung aus einer Arbeitsmaschine und zumindest einem an die Arbeitsmaschine adaptierten Anbaugerät;
- Fig. 2: eine schematische Darstellung der Maschinenanordnung mit einem Fahrerassistenzsystem;
- Fig. 3: eine schematische Ansicht der Struktur eines Einstellautomaten der Maschinenanordnung;
- Fig. 4: eine schematische Darstellung des Fahrerassistenzsystems;
- Fig. 5: ein Flussdiagramm zur Veranschaulichung der Arbeitsweise des Fahrerassistenzsystems; und
- Fig. 6 bis Fig. 30: schematisch und exemplarisch Darstellungen des Menüführungs- und Bedienkonzeptes des Fahrerassistenzsystems.

Die vorliegende Erfindung wird beispielhaft anhand einer Maschinenanordnung 1, die aus einer als Traktor ausgeführten Arbeitsmaschine 2 und zumindest einem als ein Scheibenmähwerk 4 ausgeführten Anbaugerät 3 besteht, näher erläutert. Das zumindest eine Anbaugeräte 3 kann beispielsweise auch als Ladewagen, Schwader, Wender, Mähwerk, Ballenpresse, Bodenbearbeitungsgerät, Düngerstreuer oder Feldspritze ausgeführt sein.

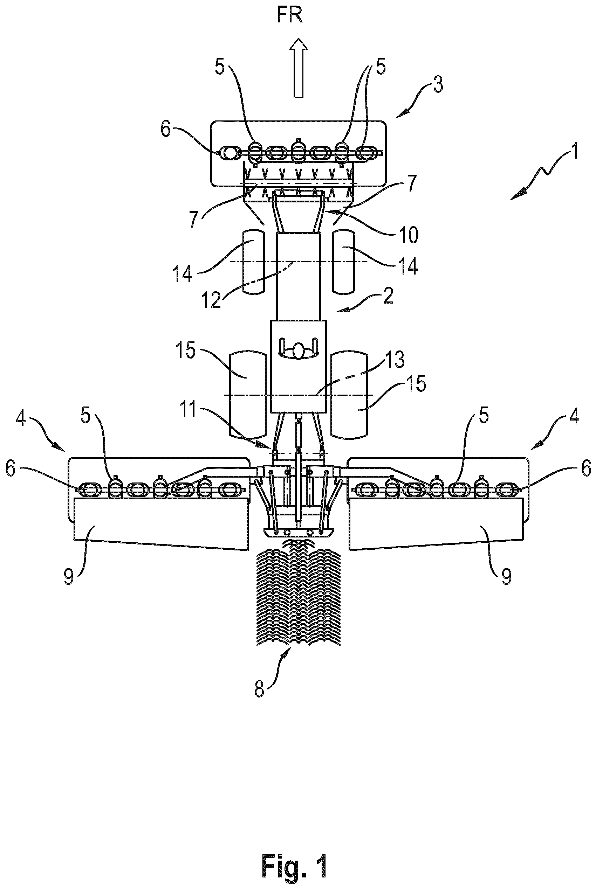

In Fig. 1 ist eine Draufsicht auf eine Maschinenanordnung 1 aus einer Arbeitsmaschine 2 und zumindest einem an die Arbeitsmaschine 2 adaptierten Anbaugerät dargestellt. Die Arbeitsmaschine 2 ist als ein Traktor ausgeführt. Das Anbaugerät ist im dargestellten Ausführungsbeispiel als ein frontseitig angeordnetes Scheibenmähwerk 4, welches nachfolgend auch als Frontscheibenmähwerk bezeichnet wird, ausgeführt sowie als im Heckbereich der Arbeitsmaschine 2 angeordnete Scheibenmähwerke 4, die nachfolgend auch als Heckscheibenmähwerke bezeichnet werden. Die Anordnung eines oder mehrerer Heckscheibenmähwerke 4 kann hinsichtlich ihrer Positionierung im Heckbereich variieren, je nachdem ob es sich um ein mittenaufgehängtes oder seitenaufgehängtes Heckscheibenmähwerk 4 handelt. Darüber hinaus kann ein im Heckbereich angeordnetes Scheibenmähwerk 4 als gezogenes Mähwerk mit Mittendeichsel oder Seitendeichsel ausgeführt sein. Jedes der in Fig. 1 dargestellten Scheibenmähwerke 4 weist Schneidorgane 5 zum Trennen von Erntegut auf, wobei die Schneidorgane 5 quer zur Fahrrichtung FR gesehen, unter Ausbildung jeweils eines Mähbalkens 6 nebeneinander positioniert sind.

Das frontseitig angeordnete Scheibenmähwerk 4 weist eine optionale Zusatzausstattung 7 auf, die als Zinkenaufbereiter oder Walzenaufbereiter ausgeführt sein kann. Die heckseitig angeordneten Scheibenmähwerke 4 können gleichfalls mit einer solchen Zusatzausstattung 7 ausgeführt sein. Die Heckscheibenmähwerke 4 können zudem mit Querfördervorrichtungen 9 zur Schwadablage als Zusatzausstattung 7 ausgestattet sein, die dem Transport des geschnittenen Erntegutes quer zur Fahrrichtung FR dienen, wobei die jeweilige Querförderrichtung 9 jeweils von außen nach innen gerichtet ist. Die Querfördervorrichtungen 9 können als Bandeinheiten oder Schneckenförderer ausgeführt sein. Mittels der Querförderrichtungen 9 lassen sich verschiedene Formen der Ablage eines Schwads 8 erreichen. Zur Adaption der Scheibenmähwerke 4 an der Arbeitsmaschine 2 weist dieses ein frontseitiges Hubwerk 10 sowie ein heckseitiges Hubwerk 11 auf. Die Hubwerke 10, 11 sind als Dreipunkthubwerke ausgeführt und werden hydraulisch betätigt, und weisen einstellbare Oberlenker 11a und Unterlenker 11b auf.

Die Arbeitsmaschine 2 weist eine Vorderachse 12 und eine Hinterachse 13 mit daran angeordneten Vorderrädern 14 und Hinterrädern 15 auf. Die Vorderräder 14 und die Hinterräder 15 variieren in der Regel hinsichtlich der Abmessungen ihrer Bereifung.

Die Arbeitsmaschine 2 weist verschiedene Arbeitsaggregate 34 auf, wie beispielsweise einen Antriebsmotor 16, ein Getriebe 17, Nebenabtriebswellen 18, die Hubwerke 10, 11 oder eine Reifendruckregelanlage. Die Arbeitsaggregate 34 der Arbeitsmaschine 2 werden durch eine als Jobrechner ausgeführte Steuereinrichtung 19 gesteuert und geregelt vorgesehen ist. Die Steuereinrichtung 19 ist dazu eingerichtet, Einstellparameter dieser Arbeitsaggregate 34 zu bestimmen und einzustellen. In einer Kabine der Arbeitsmaschine 2 kann eine Bedien-und Anzeigeeinheit 20 angeordnet sein, die mit der Steuereinrichtung 19 in Verbindung steht.

Der Maschinenanordnung 1 ist ein Fahrerassistenzsystem 21 zugeordnet, welches der Einstellung und Optimierung des Betriebs der Maschinenanordnung 1 aus Arbeitsmaschine 2 und dem zumindest einen Anbaugerät 3, hier den Scheibenmähwerken 4, dient. Das Fahrerassistenzsystem 21 verfügt über eine Recheneinheit 22 und zumindest eine Bedien- und Anzeigeeinheit 23. Von der Recheneinheit 22 werden von maschineninternen Sensorsystemen 35 generierte interne Informationen 24, externe Informationen 25 und in der Recheneinheit hinterlegbare Informationen 26 verarbeitet. Die Bedien- und Anzeigeeinheit 23 kann von der Bedien- und Anzeigeeinheit 20 in der Kabine der Arbeitsmaschine 2 gebildet sein oder als eine zusätzliche Bedien- und Anzeigeeinheit ausgeführt sein, insbesondere als Teil einer mobilen Datenverarbeitungsvorrichtung 27 wie einem Mobilfunktelefon oder einem Tablet.

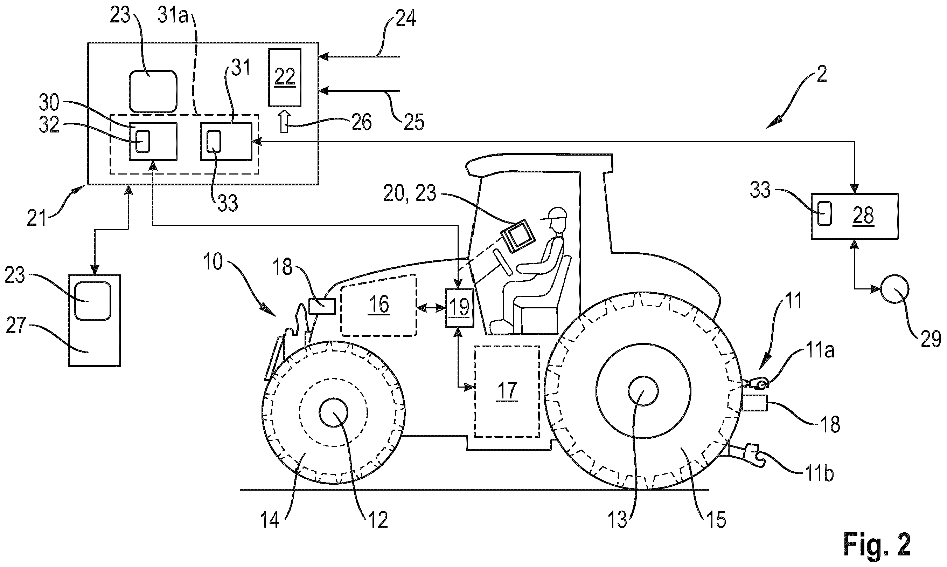

Dem oder den in Fig. 2 nicht dargestellten Scheibenmähwerken 4 der Maschinenanordnung 1 kann zumindest eine Steuereinrichtung 28 zugeordnet sein, die der Steuerung und Regelung von einem oder mehreren Arbeitsaggregaten 29 des Scheibenmähwerkes 4 dient. Die Steuereinrichtung 28 kann gleichfalls als Jobrechner ausgeführt sein. Alternativ kann die Steuervorrichtung 28 des zumindest einen Scheibenmähwerkes 4 als separates Terminal oder als Hydraulikventilanordnung der Arbeitsmaschine 2 ausgeführt sein, die einen Teil des Arbeitsmaschineneinstellautomaten 30 und/oder des Scheibenmähwerkeinstellautomaten 31 ausbildet.

Ein Arbeitsaggregat 29 des Frontscheibenmähwerkes 3 ist beispielsweise die als Zinkenaufbereiter oder Walzenaufbereiter ausgeführte Zusatzausstattung 7. Die Querfördervorrichtung 9 des Heckscheibenmähwerkes 4 oder der Heckscheibenmähwerke 4 bilden ein weiteres Arbeitsaggregat 29, welches oder welche durch die Steuereinrichtung 28 gesteuert und geregelt wird bzw. werden. Einstellparameter der Zusatzausstattung 7 als Arbeitsaggregate 29 des Scheibenmähwerkes 4 sind der Abstand von rotierenden Zinken zu Reibplatten oder Zinkenkämmen der Zinkenaufbereiter sowie der Walzenabstand und/oder die Vorspannung, mit der die Walzenaufbereiter beaufschlagt werden. Weitere Einstellparameter der Zusatzausstattung 7 sind Drehzahlen der rotierenden Zinken bzw. Walzen.

Die Steuereinrichtungen 19 und 28 der Arbeitsmaschine 2 und der Scheibenmähwerke 4 können -wie dargestellt - separat ausgeführt sein oder als eine gemeinsame Steuereinrichtung, die an der Arbeitsmaschine 2 oder einem der Scheibenmähwerke 4 angeordnet ist.

Das Fahrerassistenzsystem 21 ist so strukturiert, dass es einen Arbeitsmaschineneinstellautomaten 30 und einen Anbaugeräteeinstellautomaten 31 bildet, wobei die jeweiligen Einstellautomaten 30, 31 in Abhängigkeit voneinander eine Optimierung der Arbeitsweise der Arbeitsmaschine 2 und des zumindest einen Anbaugerätes 3 bewirken. Das Fahrerassistenzsystem 21 umfasst dem Arbeitsmaschineneinstellautomaten 30 sowie dem Anbaugeräteeinstellautomat 31 zugeordnete Regelwerke 32, 33 zur Optimierung der Arbeitsweise der Arbeitsmaschine 2 sowie des zumindest einen Anbaugerätes 3. Bevorzugt bilden der Arbeitsmaschineneinstellautomat 30 und der Anbaugeräteeinstellautomat 31 einen gemeinsamen Einstellautomaten 31a.

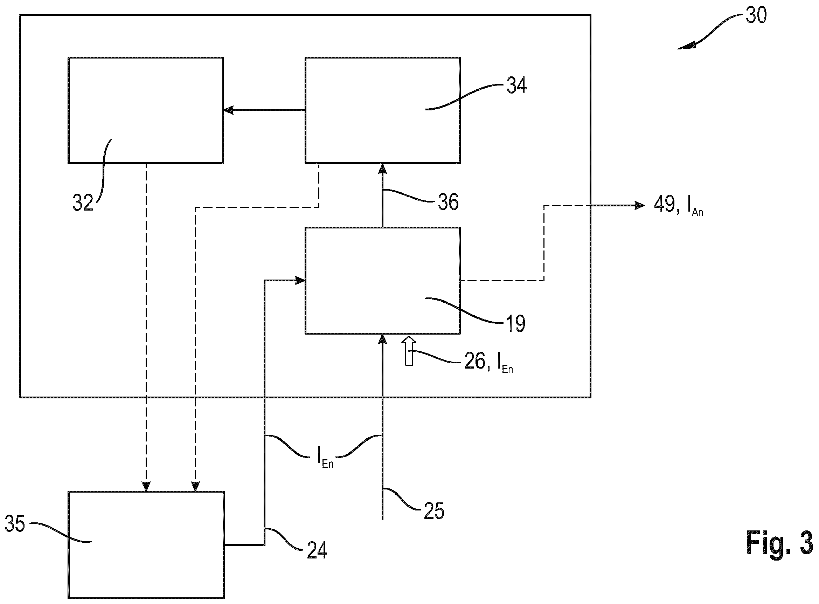

In Fig. 3 ist eine schematische Ansicht der Struktur eines der Einstellautomaten 30, 31 dargestellt. Der exemplarisch dargestellte Arbeitsmaschineneinstellautomat 30 umfasst die Arbeitsaggregate 34 der Arbeitsmaschine 2, maschineninterne Sensorsysteme 35 sowie die Steuereinrichtung 19. Von der Steuereinrichtung 19 werden Steuersignale 36 an die Arbeitsaggregate 34, wie die Hubwerke 10, 11, den Antriebsmotor 16, das Getriebe 17, die Nebenabtriebswellen 18, mittels eines Bussystems übermittelt, welche der Einstellung zumindest eines der Arbeitsaggregate 34 dienen. Zumindest ein Sensorsystem 35 überwacht das zumindest eine Arbeitsaggregate 34 und gegebenenfalls einen oder mehrere dem Arbeitsaggregate 34 zugeordnete Aktoren 32. Die von dem zumindest einen Sensorsystem 35 generierten Sensordaten 24 werden mittels des Bussystems an die Steuereinrichtung 19 zur Auswertung übertragen. Darüber hinaus werden der Steuereinrichtung 19 externe Informationen 25 sowie die in der Recheneinheit 22 hinterlegbaren Informationen 26 bereitgestellt.

Die von dem zumindest einen Sensorsystem 35 bereitgestellten Sensordaten 24, die in der Recheneinheit 22 hinterlegbaren Informationen 26 sowie die externen Informationen 25 bilden Eingangssignale I_{En} des Einstellautomaten 30. Mit I_{An} sind Ausgangssignale respektive Einstellparameter 49 des Einstellautomaten 30 bezeichnet. Der Einstellautomat 30 optimiert die Arbeitsweise der Arbeitsmaschine 2 autonom, d.h. der Einstellautomat 30 ist dazu eingerichtet, die erforderlichen Einstellungen von Einstellparametern 49 der Arbeitsaggregate 34 kontinuierlich autonom zu bestimmen und vorzugeben. Durch den Einstellautomaten 30 werden an die jeweils vorliegenden Betriebs- und Mähbedingungen optimal angepasste Einstellparameter 49 bereitgestellt. Der Anbaugeräteeinstellautomat 31 ist strukturell identisch aufgebaut und arbeitet in gleicher Weise. Dabei bewirken die jeweiligen bzw. in dem gemeinsamen Einstellautomaten 31a zusammengefassten Einstellautomaten 30, 31 in Abhängigkeit voneinander eine Optimierung der Arbeitsweise der Arbeitsmaschine 2 und des zumindest einen Anbaugerätes 3.

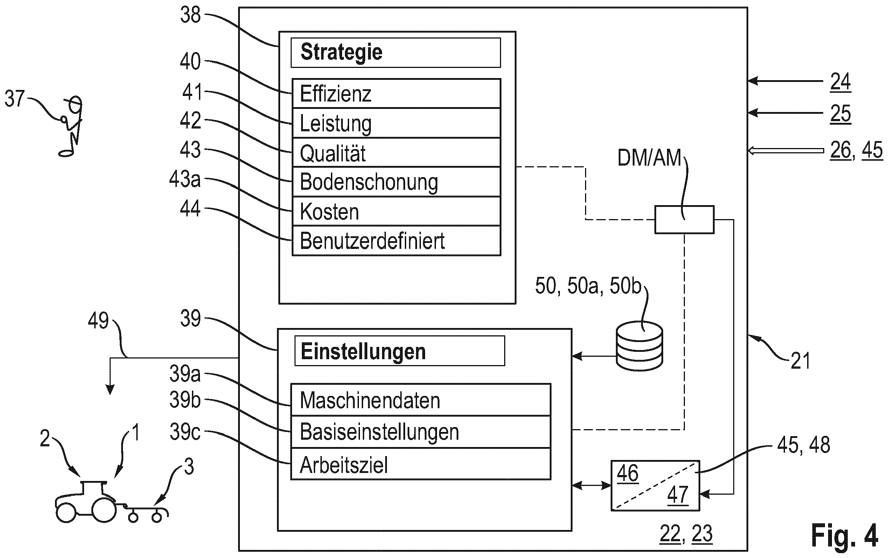

Fig. 4 zeigt eine schematische Darstellung des Fahrerassistenzsystems 21 bei gleichzeitiger Veranschaulichung von Visualisierungs- Bedien- und Strukturaspekten desselben. Das Fahrerassistenzsystem 21 weist ein Modul "Strategie" 38 und ein Modul "Einstellungen" 39, welches mehrere auswählbare Einzelmodule "Maschinendaten" 39a, "Basiseinstellungen" 39b und "Arbeitsziel" 39c umfasst, auf.

In der Recheneinheit 22 sind Betriebsparameter 45 der Maschinenanordnung 1 als Informationen 26 hinterlegt, die auf einem oder mehreren herstellerspezifischen Basisdatensätzen 46 der Arbeitsmaschine 2 und des zumindest einen Anbaugerätes 3 basieren. Die jeweiligen Basisdatensätze 46 umfassen all diejenigen Daten, die von einer Bedienperson 37 nicht zwingend spezifisch editiert werden müssen und für die von der Bedienperson 37 im Modul "Strategie" 38 gewählte Aufgabe allgemeingültig und damit vordefiniert hinterlegt sind. Daneben gibt es bedienerspezifische Basisdatensätze 47, die einer spezifischen Maschinenanordnung 1 oder einer spezifischen Arbeitsmaschine 2 und/oder zumindest einem spezifischen Anbaugerät 3 durch die Bedienperson 37 zugewiesen sind. Vorteilhaft ist es, wenn für unterschiedliche Arbeitsmaschinen 1 und/oder unterschiedliche Anbaugeräte 3 zumindest eines Herstellers gerätespezifische Betriebsparameter 45 und/oder gerätespezifische Maschinenparameter 48 in der Recheneinheit 22 als Einstellparameter 49 wiederabrufbar hinterlegbar sind. Auf diese Weise kann eine, vorzugsweise nicht editierbare, Basiskonfiguration bereitgestellt werden, die für die Optimierung der Arbeitsweise der jeweiligen Maschinenanordnung 1 durch die Einstellautomaten 30, 31 oder den gemeinsamen Einstellautomaten 31a herangezogen werden kann.

Anhand der gerätespezifischen Betriebsparameter 45 und/oder gerätespezifischen Maschinenparameter 48 erfolgt die Optimierung der Arbeitsweise der spezifischen Maschinenanordnung 1, nebst den von maschineninternen Sensorsystemen 35 generierten Informationen 24 sowie externen Informationen 25, nur auf der Grundlage der für die spezifische Arbeitsmaschine 2 und das zumindest eine spezifische Anbaugerät 3 in Betracht kommenden Betriebsparametern 45 und Maschinenparametern 48. Somit werden nur die für die Ausstattungsvariante der Maschinenanordnung 1 relevanten Einstellparameter 49 zur Optimierung der Arbeitsweise von dem Fahrerassistenzsystem 21 vorgeschlagen.

Bevorzugt können die auswählbaren Strategien zumindest eine der Strategien "Effizienz" 40, "Leistung" 41, "Qualität" 42, "Bodenschonung" 43, Kosten 43a und/oder "Benutzerdefiniert" 44 umfassen. Die Zielstellungen der auswählbaren Strategien 40, 41, 42, 43, 43a, 44 ergeben sich in Abhängigkeit von der Zusammensetzung der Maschinenanordnung 1 und werden insbesondere durch die Art, den Einsatzzweck und die Arbeitsweise des zumindest einen Anbaugerätes 3 beeinflusst.

Der Strategie "Effizienz" 40 liegt als Optimierungsziel die Reduzierung des Kraftstoffverbrauchs pro Flächeneinheit (I/ha), und/oder die Reduzierung der Betriebsstunden der Maschinenanordnung 1 für die Abarbeitung eines Arbeitsauftrages, die Verschleißminimierung und/oder die Minimierung der benötigen Zeit für die Durchführung von Vorgewendemanövern zugrunde. Die Strategie "Effizienz" 40 kann im beispielhaften Fall des Scheibenmähwerkes 4 auch die Dauer der Trocknung des gemähten Erntegutes einschließen, welche durch den Einsatz von Walzenaufbereitern oder Zinkenaufbereiten als Zusatzausstattung 7 des jeweiligen Scheibenmähwerkes 4 beeinflussbar ist. Andere Optionen für die Strategie "Effizienz" 40 resultieren aus der Art des Anbaugerätes 3 und können entsprechend variieren.

Die Strategie "Leistung" 41 orientiert sich insbesondere an der maximal erreichbaren Flächenleistung (ha/h) und/oder der Steigerung der Betriebsstunden der Maschinenanordnung 1.

Bei der Strategie "Qualität" 42 steht eine aufgrund optimierter Einstellparameter erreichbare Arbeitsqualität durch das zumindest eine Anbaugerät 3 im Vordergrund. Hierzu zählen im Fall des Scheibenmähwerkes 4 als Anbaugerät 3 beispielsweise eine Minimierung des Rohascheanteils sowie das Einhalten einer Mindestmähhöhe, um den Nachwuchs von Futterpflanzen sicherzustellen, insbesondere um das Ausbreiten von Beikraut zu minimieren, welche die nachwachsenden Futterpflanzen zurückdrängen können. Damit einhergehend lässt sich der Einsatz von Herbiziden reduzieren. Ein weiterer Aspekt, welcher bei der Strategie "Qualität" 42 berücksichtigt werden kann, ist die Qualität der Aufbereitung von blattreichen Futterarten, die gleichmäßige Breitverteilung des gemähten Erntegutes über die Arbeitsbreite des Scheibenmähwerkes 4 und/oder die Art und Gleichmäßigkeit der Schwadablage.

Mit der Optimierungsstrategie "Bodenschonung" 43 lässt sich das Ziel der Minimierung von durch die Maschinenanordnung 1 hervorgerufenem Bodendruck und/oder Bodenverdichtung erreichen und/oder das Traktionsverhalten optimieren.

Mit der Strategie "Kosten" 43a können die Kosten pro Fläche (€ / ha) unter Berücksichtigung der Kraftstoff-, Lohn- und/oder Maschinenkosten optimiert werden.

Die Strategie "Benutzerdefiniert" 44 ermöglicht es der Bedienperson 37, die verfügbaren Strategien 41, 42, 43 und 43a zumindest teilweise miteinander mit variablen Anteilen zu verknüpfen.

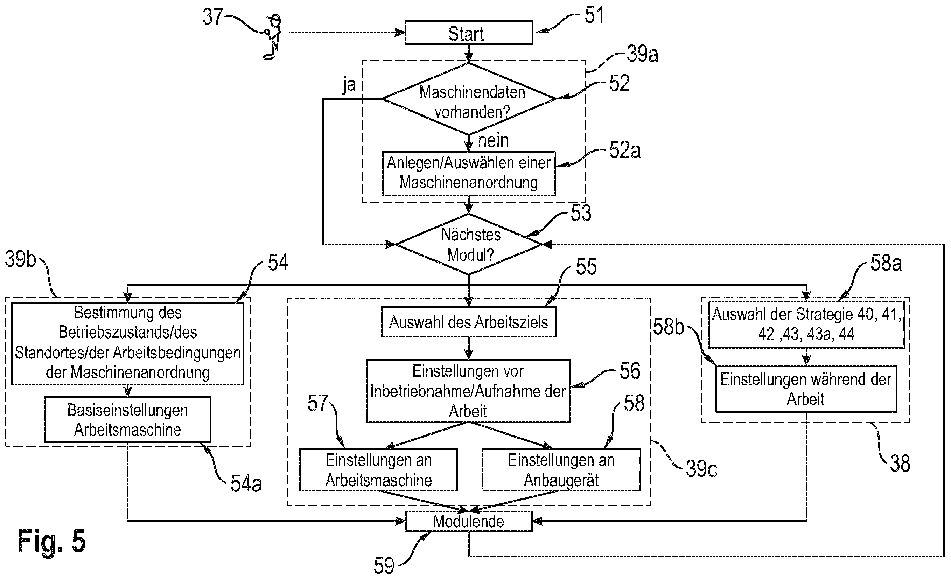

Das Modul "Einstellungen" 39 mit seinen Einzelmodule 39a, 39b, 39c hat unter anderem die natürlichsprachige, dialogbasierte Auswahl der Zusammenstellung der Maschinenanordnung 1 durch die Bedienperson 37 zum Gegenstand. In einer oder mehreren Datenbanken 50, 50a, 50b, die in der Recheneinheit 21 hinterlegt sein kann bzw. können, können Daten über verschiedene Arbeitsmaschinen 2 und Anbaugeräte 3 sowie zugehörige gerätespezifische Betriebsparameter 45 und/oder gerätespezifische Maschinenparameter 48 abrufbar hinterlegt sein. Auf diese Datenbanken 50, 50a, 50b kann bei der Ausführung des Moduls "Einstellungen" 39 bzw. der jeweiligen Einzelmodule "Maschinendaten" 39a, "Basiseinstellungen" 39b, "Arbeitsziel" 39c als auch des Moduls "Strategie" 38 zurückgegriffen werden,, um die Arbeitsmaschine 2 sowie das zumindest eine adaptierte Anbaugerät 3 zu identifizieren. Anhand der Identifikation werden die weiteren Auswahl- und/oder Einstellmöglichkeiten bei der Ausführung des Moduls "Einstellungen" 39 abgeleitet. Die natürlichsprachige, dialogbasierte Abarbeitung des Modul "Einstellungen" 39 bzw. der auswählbaren Einzelmodule 39a, 39b, 39c wird nachfolgend anhand der Fig. 5 näher erläutert. Die Datenbanken 50, 50a, 50b können auch als externe Datenbanken ausgeführt sein, die Teil eines entfernten Farmmanagementsystems oder dergleichen sein können. Die Abarbeitung des Modul "Einstellung" 39 erfolgt dabei schrittweise.

Das Fahrerassistenzsystem 21 kann zudem so beschaffen sein, dass es entweder in einem Dialogmodus DM mit der Bedienperson 37 oder in einem Automatikmodus AM betrieben werden kann. In beiden Fällen findet die Kommunikation, der Dialog mit der Bedienperson 37, natürlichsprachig statt.

Durch das Modul "Einstellungen" 39 wird der Bedienperson 37 eine Übersicht von Einstellschritten 95 der Maschinenanordnung 1 aus der Gruppe "Gerätedetails", "Arbeitsbedingungen", "Reifeneinstellung", "Ballastierungsempfehlung", "Reifendruckempfehlung", "Ernteguttyp", "Vorbereitung auf dem Hof", "Vorbereitung auf dem Feld", "Arbeitsstrategieeinstellungen", "Gerätedetails", "Aufgabe", "Typ", "Ankuppelpunkt und Ankuppelart", "Gewichtsbestimmung", "Ausrüstung des Anbaugerätes" vorgegeben wird. vorgegeben.

In Fig. 5 ist ein Flussdiagramm zur Veranschaulichung der Arbeitsweise des Fahrerassistenzsystems 21 dargestellt.

In einem ersten Verfahrensschritt 51 erfolgt die Aktivierung des Fahrerassistenzsystems 21 durch die Bedienperson 37 und eine Modulauswahl wird aktiviert und abgearbeitet. Dabei kann die Bedienperson 37 das Einzelmodul "Maschinendaten" 39a oder eines der anderen Module 39b, 39c oder 38 auswählen.

Im Verfahrensschritt 52 wird geprüft, ob Maschinendaten, wie gerätespezifische Betriebsparameter 45 und/oder gerätespezifische Maschinenparameter 48, vorhanden sind.

Im nachfolgenden Verfahrensschritt 52a wird in Abhängigkeit vom Ergebnis des Verfahrensschrittes 52 im Rahmen der Abarbeitung des Moduls "Maschinendaten" 39 das Anlegen und/oder Auswählen einer Maschinenanordnung 1 durchgeführt. Dies kann die Bedienperson 37 in einem natürlichsprachigen Dialog mit dem Fahrerassistenzsystem 21 bewirken, wobei die herstellerspezifische Auswahl von Arbeitsmaschine 2 und dem zumindest einen Anbaugerät 3 der Maschinenanordnung 1 durch die Bedienperson 37 erfolgt. Die nachfolgenden Erläuterungen erfolgen exemplarisch anhand der konkreten Ausführung des Anbaugerätes 3 als Scheibenmähwerk 4. Diese lassen sich entsprechend auch auf andere Arten von Anbaugeräten übertragen.

Im einfachsten Fall wird das Fahrerassistenzsystem 21 der Bedienperson 37 die Frage stellen, für welche der in Fig. 1 beispielhaft erläuterten Kombination einer Maschinenanordnung 1 die Anlage oder Auswahl veranlasst werden soll. Zu diesem Zweck kann die Bedienperson 37 auf die Datenbank 50 respektive die herstellerspezifischen und/oder bedienerspezifischen Basisdatensätze 46, 47 zugreifen. An dieser Stelle lässt sich auch eine neue Maschinenanordnung 1 als neuer bedienerspezifischer Datensatz 47 durch die Bedienperson 37 definieren und anlegen. Die Abspeicherung erfolgt vorzugsweise in der Datenbank 50.

Für die Basiseinstellung der angelegten oder ausgewählten Maschinenanordnung 1 können im Rahmen der Ausführung der Einzelmodule 39a, 39b, 39c spezifische Angaben zu dem zumindest einen Scheibenmähwerk 4 abgefragt werden, sofern diese Informationen nicht bereits als herstellerspezifische und/oder bedienerspezifische Basisdatensätze 46, 47 nach einer bereits zu einem vorangehenden Zeitpunkt erfolgten Ausführung des Moduls "Einstellungen" 39 als Einstellparameter 49 abrufbar hinterlegt worden sind. Zu den spezifischen Angaben zählen unter anderem der Hersteller des Scheibenmähwerkes 4, die Art des Scheibenmähwerkes 4, d.h. die Ausführung und Anordnung als Frontscheibenmähwerk oder Heckscheibenmähwerk, die Breite des Mähbalkens 6 und die Anzahl der Schneidorgane 5 des jeweiligen Schneidwerkes 4, sowie im Fall des Heckscheibenmähwerkes 4 die seitliche oder mittige Aufhängung an der Arbeitsmaschine 2. Weiterhin werden die Art und das Vorhandensein einer Zusatzausstattung 7, die Art der Ansteuerung des zumindest einen Scheibenmähwerkes 4, der Typ des Hydrauliksystems für den Betrieb des zumindest einen Scheibenmähwerkes 4, die Art und das Vorhandensein einer Querfördervorrichtung 9 zur Schwadablage in dem natürlichsprachigen Dialog mit dem Fahrerassistenzsystem 21 abgefragt. Ein weiterer Aspekt ist die Abfrage der Art der Steuerungsvorrichtung 28 zur Ansteuerung des jeweiligen Scheibenmähwerkes 4. Des Weiteren wird die Art des verfügbaren Hydrauliksystems abgefragt, wobei es sich um ein offenes Load-Sensing-System oder ein geschlossenes Load-Sensing-System handeln kann. Ein weiterer Aspekt ist die Abfrage ob eine Querfördervorrichtung 9 zur Schwadablage vorhanden ist und wie diese ausgebildet ist. Für die Auswahl durch die Bedienperson 37 können als Förderband oder Schneckenförderer ausgeführte Querfördervorrichtung 9 eines Scheibenmähwerkes 4, hier des oder der Heckscheibenmähwerke, vorgeschlagen werden.

Nach erfolgter Anlage oder Auswahl der Maschinenanordnung 1 kann im Verfahrensschritt 53 zu einem weiteren Modul 38, 39b oder 39c übergegangen werden.

Das Einzelmodul "Basiseinstellungen" 39b hat Einstellungen der Arbeitsmaschine 2 zum Gegenstand. Hierzu gehören die Einstellschritte 95 "Gerätedetails", "Arbeitsbedingungen", "Reifeneinstellung", "Ballastierungsempfehlung", "Reifendruckempfehlung".

Im Verfahrensschritt 54 erfolgt eine Bestimmung des aktuellen Betriebszustands und/oder des Standortes der Maschinenanordnung 1. Im einfachsten Fall kann eine Bestimmung des Standortes durch einen Abfragedialog erfolgen, innerhalb dessen die Bedienperson 37 den Standort sowie den aktuellen Betriebszustand auswählt. Eine automatische Standortbestimmung kann dadurch bewirkt werden, dass der Maschinenanordnung 1, insbesondere der Arbeitsmaschine 2, ein GPS-Sender zugeordnet ist, mittels dessen die Position der Maschinenanordnung 1 bestimmbar ist. Eine automatische Bestimmung des aktuellen Betriebszustands der Maschinenanordnung 1 durch das Fahrerassistenzsystem 21 kann alternativ anhand eines durch ein Sensorsystem 35 erfassten Betriebsparameters eines Arbeitsaggregates 34 wie dem Antriebsmotor 16 oder der Nebenabtriebswellen 18 erfolgen. Betriebsparameter können dabei eine bestimmte Fahrgeschwindigkeit oder eine bestimmte Drehzahl des Nebenabtriebswellen 18 sein.

Im nachfolgenden Verfahrensschritt 54a werden die erforderlichen Basiseinstellungen der Arbeitsmaschine 2 durchgeführt. So werden vor der Aufnahme eines landwirtschaftlichen Arbeitsvorganges, insbesondere eines Mähvorganges, für die Arbeitsmaschine 2 zu bestimmende und einzustellende Einstellparameter 49 aus der Gruppe Ballastierung, Reifendruck, Reifengeometrie, Achslast, Entlastungskraft einer Entlastungsvorrichtung, Hubwerkparameter von den Einstellautomaten 30, 31 oder dem gemeinsamen Einstellautomaten 31a des Fahrerassistenzsystems 21 bestimmt und als einzustellende und/oder auszuwählende Einstellparameter 49 der Bedienperson 37 vorgegeben. Beispielsweise wird die Reifengeometrie ausgehend von den in der Reifendatenbank 50a hinterlegten herstellerspezifischen Basisdatensätze 46 der Arbeitsmaschine 1 bestimmt. Das Fahrerassistenzsystem 21 ermöglicht es der Bedienperson 37 darüber hinaus, diese Information des Basisdatensatzes 46 in einem natürlichsprachigen Dialog zu editieren und als bedienerspezifischen Datensatz 47 abzuspeichern. Die erforderliche Ballastierung der Arbeitsmaschine 2 ergibt sich aus der im Verfahrensschritt 52 bzw. 52a bestimmten Auswahl der vorliegenden Maschinenanordnung 1 in Abhängigkeit von Typ, Anzahl und Anordnung des zumindest einen Anbaugerätes 3 respektive Scheibenmähwerks 4. Nach der Abarbeitung der Verfahrensschritte 54 und 54a des Einzelmoduls "Basiseinstellungen" wird auf den Verfahrensschritt 53 zwecks einer weiteren oder erneuten Modulauswahl zurückgesprungen.

Das Einzelmodul "Arbeitsziel" 39c hat spezifische Vorgaben zum Gegenstand, die weiteren Einfluss auf die Einstellungen der Arbeitsmaschine 2 und des zumindest einen als Scheibenmähwerkes 4 ausgeführten Anbaugerätes 3 haben. Hierzu gehören die Einstellschritte 95 "Ernteguttyp", "Vorbereitung auf dem Hof", "Vorbereitung auf dem Feld", "Arbeitsstrategieeinstellungen" sowie "Gerätedetails", "Aufgabe", "Typ", "Ankuppelpunkt und Ankuppelart", "Gewichtsbestimmung", "Ausrüstung des Anbaugerätes".

Im gemäß dem Einzelmodul "Arbeitsziel" 39c auszuführenden Verfahrensschritt 55 wird als Arbeitsziel die Art der Kulturpflanze abgefragt, die mit der Maschinenanordnung 1 gemäht werden soll. Hierzu zählen Gras, welches auf einer Wiese oder einem Feld angebaut wird, Luzerne (AlfaAlfa), Klee, Ganzpflanzensilage, Zuckerrohr und sonstige Fruchtarten. Die Auswahl der Kulturpflanzen erfolgt vorzugsweise mittels eines Auswahlmenüs. Zudem kann im Verfahrensschritt 55 die vorherrschende Erntebedingung abgefragt werden. Dabei kann es sich bei der vorherrschenden Erntebedingung insbesondere um Informationen über die Wuchsdichte, die Wuchshöhe oder ob das Erntegut steht oder liegt handeln, welche einen großen Einfluss auf den Mähvorgang haben.

In Abhängigkeit vom Ergebnis des Verfahrensschrittes 55 werden in den nachfolgenden Verfahrensschritten 56 bis 58 Einstellparameter 49 durch die Einstellautomaten 30, 31 bzw. den gemeinsamen Einstellautomaten 31a vorgeschlagen und durch Einstellung und/oder Auswahl durch die Bedienperson 37 vorgenommen, welche für die Einsatzdauer bei der Durchführung des landwirtschaftlichen Arbeitsvorganges, d.h. des Mähvorganges, der Maschinenanordnung 1 unverändert bleiben. Die gemäß den Verfahrensschritten 56 bis 58 vorzunehmenden Einstellungen erfolgen in der Regel vor einer Inbetriebnahme bzw. Aufnahme der Arbeit auf der Hofstätte der Maschinenanordnung 1, da hierzu teilweise manuelle Eingriffe durch die Bedienperson 37 erforderlich sind, die auf die durch die Einstellautomaten 30, 31 vorgeschlagenen Einstellparameter 49 zurückgehen. Grundsätzlich können die gemäß den Verfahrensschritten 56 bis 58 vorzunehmenden Einstellungen auch unmittelbar vor der Inbetriebnahme auf einem abzuarbeitenden Feld durchführbar sein.

Im Verfahrensschritt 58 werden die Basiseinstellungen an dem zumindest einen Scheibenmähwerk 4 vorgenommen. Diese umfassen vor der Inbetriebnahme der Maschinenanordnung 1 und/oder der Aufnahme eines landwirtschaftlichen Arbeitsvorganges durch die Maschinenanordnung 1 von dem Fahrerassistenzsystem 21 zu bestimmende Einstellparameter 49 für das zumindest eine Scheibenmähwerk 4 aus der Gruppe Typ des zumindest einen Scheibenmähwerkes 4, Position und Mittel zur Anordnung des zumindest einen Scheibenmähwerkes 4 an der Arbeitsmaschine 2, Vorhandensein und Art der Zusatzausstattung 7 an dem zumindest einen Scheibenmähwerk 4. Anhand des Typs des jeweiligen Scheibenmähwerkes 4 lässt sich mitunter auf die Position der Anordnung an der Arbeitsmaschine 2 schließen.

Zudem ist vor der Inbetriebnahme der Maschinenanordnung 1 und/oder der Aufnahme eines landwirtschaftlichen Arbeitsvorganges durch die Maschinenanordnung 1 im Verfahrensschritt 57 zumindest ein Einstellparameter 49, der aus der Gruppe Antriebsdrehzahl zumindest einer Nebenabtriebswelle 18 der Arbeitsmaschine 2, Hubwerkeinstellparameter, Art einer Anbauvorrichtung für die mittelbare oder unmittelbare Adaption des zumindest einen Scheibenmähwerkes 4 an die Arbeitsmaschine 2, Parameter der Anbauvorrichtung, Schnitthöhe, Entlastungskraft einer Entlastungsvorrichtung, Bodenabstand einer Bodenkonturanpassungsvorrichtung, Kopplungsabstand zur Arbeitsmaschine 2 ist, zu bestimmen und als von der Bedienperson 37 einzustellender und/oder auszuwählender Einstellparameter 49 vorzugeben.

So können bereits auf der Hofstätte Hubwerkeinstellparameter und/oder die Art der Anbauvorrichtung für die mittelbare oder unmittelbare Adaption des Anbaugerätes 3 an die Arbeitsmaschine 2 sowie Betriebsparameter der Anbauvorrichtung als Einstellparameter 49 durch das Fahrerassistenzsystem 21 bestimmt werden. Der Anbau des Scheibenmähwerkes 4 kann mittelbar durch einen Schnellkuppelrahmen erfolgen, welcher exemplarisch in der EP 3 351 074 A1 beschrieben ist, oder unmittelbar an Oberlenker 11a und Unterlenkern 11b beispielsweise des heckseitigen Hubwerkes 11 oder entsprechend an Oberlenker und Unterlenkern des frontseitigen Hubwerkes 10. Hubwerkeinstellparameter sind die vertikale und seitliche Verstellbarkeit der Lenker und deren Sperrung sowie die einstellbare Länge von Hubstreben des jeweiligen Hubwerkes 10, 11.

Das frontseitige Hubwerk 10 ist mit einer Entlastungsvorrichtung zur Minderung des Anteils der Gewichtskraft, welche über das Scheibenmähwerk 4 in der Arbeitsstellung am Boden abgestützt wird, ausgeführt, welche in Abhängigkeit von der Ausführung der Arbeitsmaschine 2 als Zugfeder oder als Hydraulikzylinder mit einer Kette oder als integrierte Entlastungsvorrichtung, wie sie exemplarisch in EP 2 316 256 A1 beschrieben ist, ausgeführt sein können. Zur Einstellung der Entlastungskraft wird die Federkraft durch die Länge der Kette eingestellt, welche von dem Einstellautomaten 31 des Fahrerassistenzsystems 21 vorgegeben wird. Im Fall des Hydraulikzylinders als Entlastungsvorrichtung oder der integrierten Entlastungsvorrichtung wird ein einzustellender Hydraulikdruck vorgegeben.

Das Vorhandensein von Walzenaufbereitern als Zusatzausstattung 7 erfordert eine Anpassung des Hydraulikdruckes, mit dem diese betrieben werden. In Abhängigkeit von der einzustellenden Schnitthöhe kann der Einsatz von Hochschnittkufen unterschiedlicher Höhe erforderlich sein.

Vor Beginn des Mähvorganges wird die jeweils einzustellende Antriebsdrehzahl an den Nebenabtriebswellen 18 durch das Fahrerassistenzsystem 21 vorgegeben. Die jeweilige einzustellende Antriebsdrehzahl ist abhängig vom Typ und der Arbeitsbreite des Scheibenmähwerkes 4.

Das Fahrerassistenzsystem 21 kann so beschaffen sein, dass die ermittelten Einstellparameter 49 entweder direkt eingestellt werden, d.h. durch mittelbare oder unmittelbare Ansteuerung von Aktoren oder dergleichen, soweit ein manueller Eingriff der Bedienperson 37 an der Arbeitsmaschine 2 und/oder dem Scheibenmähwerk 4 nicht erforderlich ist. In diesem Fall wird die Bedienperson 37 gefragt, ob die ermittelten Einstellparameter 49 eingestellt werden sollen. Alternativ erfolgt eine Anzeige der Einstellparameter 49 und die Bedienperson 37 muss sodann deren Einstellung auslösen bzw. durch einen manuellen Eingriff bewirken. Einen manuellen Eingriff bilden beispielsweise das Anhängen eines Scheibenmähwerkes 4, die Anordnung von längenveränderlichen Gelenkwellen und/oder die Einstellung der Länge von Gelenkwellen, das Justieren von Schwadblechen und dergleichen mehr.

Nach erfolgter Abarbeitung des Einzelmoduls "Arbeitsziel" 39c wird zum Verfahrensschritt 59 "Modulende" übergegangen und zum Verfahrensschritt 53 zurückgesprungen. Im Verfahrensschritt 53 hat die Bedienperson 37 die Möglichkeit, ein weiteres der Module 39a, 39b, 39c oder 38, auch erneut, auszuführen.

Die zumindest einmalige Ausführung und Abarbeitung des Einzelmoduls "Maschinendaten" 39a des Moduls "Einstellung" 39 für eine spezifische Maschinenanordnung 1 ist eine wesentliche Voraussetzung dafür, dass für die Ausführung des Moduls "Auswahl Strategie" 38 sowie die Einzelmodule "Basiseinstellungen" 39b und "Arbeitsziel" 39c notwendige Informationen dem Fahrerassistenzsystem 21, welches den Arbeitsmaschineneinstellautomaten 30 und den Scheibenmähwerkeinstellautomaten 31 bildet, zur Verfügung stehen. Da eine Auswahl des Moduls "Strategie" 38 sowie der Einzelmodule "Basiseinstellungen" 39b und "Arbeitsziel" 39c unabhängig von dem Einzelmodul "Maschinendaten" 39a durchführbar ist, sind innerhalb der Module 38, 39b, 39c Plausibilitätsanfragen vorgesehen, um zu überprüfen, ob durch eine Ausführung des Einzelmoduls "Maschinendaten" 39a eine Maschinenanordnung 1 ausgewählt oder angelegt wurde.

Dem Menüführungs - und Bedienkonzept des Fahrerassistenzsystems 21 liegt einheitlich zugrunde, Einstellempfehlungen, neben einem natürlichsprachigen Dialog, unter Zuhilfenahme von Icons, Piktogrammen, Illustrationen mit Lupen-Ansichten und/oder farblichen Hervorhebungen zu erläutern.

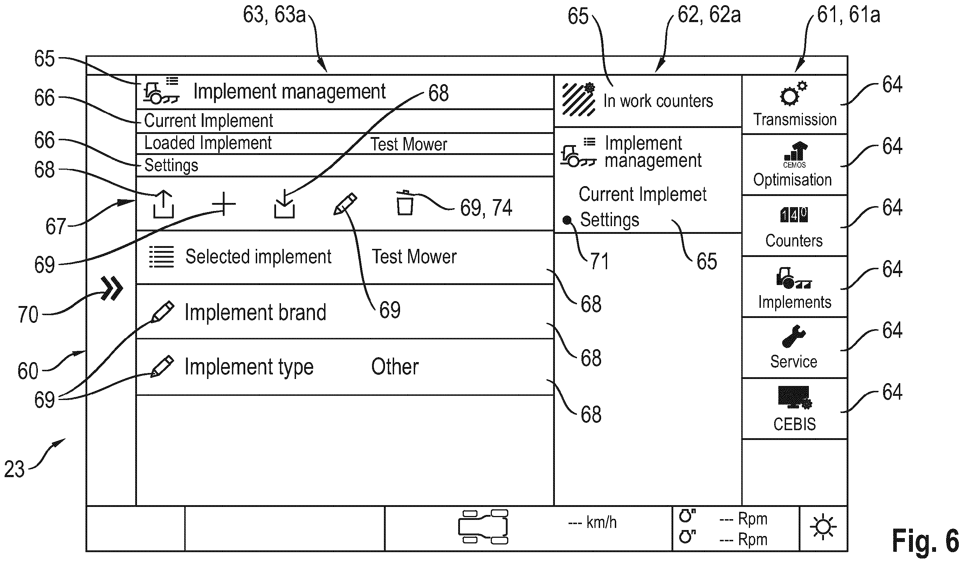

In Fig. 6 ist eine schematische Darstellung einer ersten Ansicht der zumindest einen Bedien-und Anzeigeeinheit 23 am Beispiel der Auswahl eines Scheibenmähwerks 4 als Anbaugerät 3 dargestellt. Die zumindest eine Bedien- und Anzeigeeinheit 23 ist dazu eingerichtet, in einer ersten Bedien- und Anzeigeebene 60 zumindest drei nebeneinander angeordnete Visualisierungsbereiche 61, 62, 63 dazustellen. Die Visualisierungsbereiche 61, 62, 63 sind hierarchisch absteigend nebeneinander positioniert. Mit hierarchisch absteigender Positionierung ist gemeint, dass sich ausgehend von einer Hauptmenüebene 61a im hierarchisch höchststehenden Visualisierungsbereich 61, welche oberbegriffliche Hauptmenüpunkte 64 auswählbar darstellt, zu einer darunterliegenden Menüebene 62a im Visualisierungsbereich 62, welche dem jeweiligen oberbegrifflichen Hauptmenüpunkt 64 zugehörige Menüpunkte 65 darstellt, der hierarchisch am niedrigsten stehende Visualisierungsbereich 63 mit einer Submenüebene 63a anschließt. Im Visualisierungsbereich 63 sind ein Menüband 67 mit spezifizierenden Auswahloptionen 68, Einstelloptionen 69 und/oder Bedienoptionen 70 darstellt, die dem vorangehend im Visualisierungsbereich 62 ausgewählten Menüpunkt 65 zugeordnet sind. Der Aufbau und Umfang des Menübandes 67 sowie der Umfang, in welchem die Auswahloptionen 68, Einstelloptionen 69 sowie Bedienoptionen 70 zur Verfügung stehen, können in Abhängigkeit vom ausgewählten Menüpunkt 65 variieren. Die Auswahl der in dem Menüband 67 jeweils enthaltenen Auswahloptionen 68, Einstelloptionen 69 sowie Bedienoptionen 70 erfolgt vorzugsweise durch Berühren der berührungssensitiven Oberfläche der Bedien- und Anzeigeeinheit 23.

Beispielhaft ist gemäß der Darstellung in Fig. 6 in der obersten Menüebene im Visualisierungsbereich 61 eine Auswahl des Hauptmenüpunktes 64 "Implements" ("Anbaugeräte") durch die Bedienperson 37 getroffen worden. Im daneben angeordneten Visualisierungsbereich 62 wird die dem Hauptmenüpunkt 64 zugehörige darunterliegende Menüebene 62a angezeigt, in welcher der Menüpunkt 65 "Implement management" ("Anbaugerätemanagement") durch die Bedienperson 37 aktiviert wurde. Neben dem jeweiligen auswählbaren Menüpunkt 65 kann bei getroffener Auswahl eines Menüpunktes 65 im Visualisierungsbereich 62 zusätzlich eine Übersicht der in der Submenüebene 63a des Visualisierungsbereiches 63 enthaltenen Submenüpunkte 66 dargestellt werden.

Eine jeweilige innerhalb der jeweiligen Visualisierungsbereiche 61, 62, 63 getroffene Auswahl wird optisch hervorgehoben. Hierzu kann die von der Bedienperson 37 getroffene Auswahl beispielsweise durch eine invertierte Darstellung, eine zusätzliche Umrandung und/oder eine abweichende Farbgebung der Auswahl und dergleichen mehr hervorgehoben werden.

Im Visualisierungsbereich 63 werden der ausgewählte Menüpunkt 65 sowie die zugehörigen Submenüpunkte 66 dargestellt. Im dargestellten Ausführungsbeispiel ist der Submenüpunkt 66 "Settings"("Einstellungen") aktiv ausgewählt. Die getroffene Auswahl, der Submenüpunkt 66 "Settings"("Einstellungen"), ist im hierarchisch höherstehenden Visualisierungsbereich 62 durch einen Auswahlindikator 71 hervorgehoben werden. Der Auswahlindikator 71 kann ein vorangestelltes Icon, eine optische Hervorhebung, beispielsweise durch einen Rahmen und/oder eine farblich abweichende Gestaltung sein.

Die Darstellungsgröße des jeweiligen Visualisierungsbereiches 61, 62, 63 nimmt hierarchisch absteigend zu, d.h. der Visualisierungsbereich 61 der obersten Hierarchieebene nimmt den geringsten Bereich der für die Visualisierung zur Verfügung stehenden Fläche der Bedien- und Anzeigeeinheit 23 ein.

Bevorzugt werden im Menüband 67 die Auswahloptionen 68 und Einstelloptionen 69 als Icons und/oder Piktogramme dargestellt. Die Icons oder Piktogramme sind hier und vorzugsweise dabei durch ihre spezifische Gestaltung selbsterklärend ausgeführt, so dass die Bedienperson 37 sich daran orientieren kann, ohne dass es eines zusätzlichen Kontextes bedarf. Denkbar ist ein zusätzliches Einblenden eines Kontextfensters zur Erläuterung der in dem Menüband 67 enthaltenen Auswahloptionen 68 und Einstelloptionen 69.

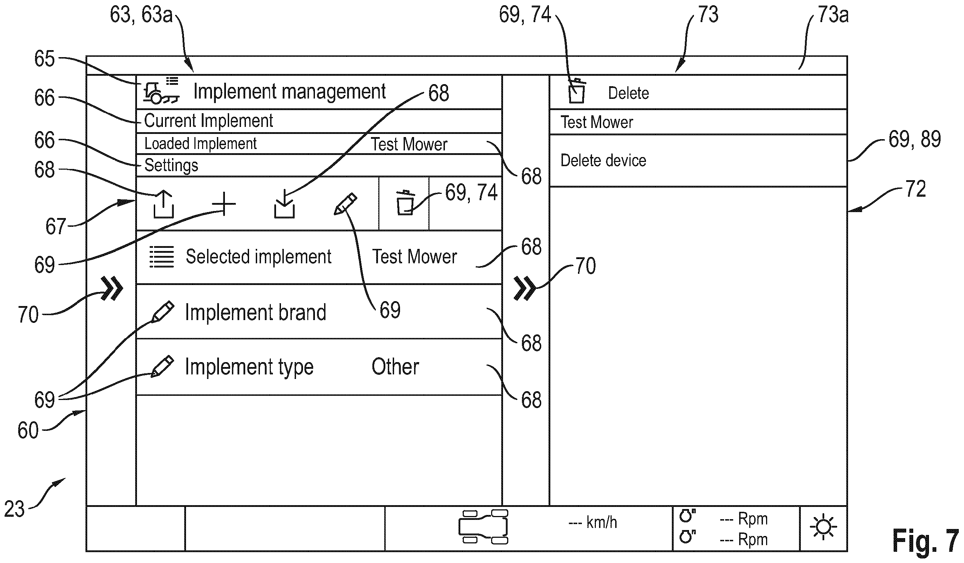

In Fig. 7 ist beispielhaft dargestellt, wie sich die Darstellung durch die Bedien- und Anzeigeeinheit 23 durch die Auswahl einer spezifischen Einstelloption 69, hier einer Löschoption 74, im Menüband 67, mit der das Löschen eines bestehenden bedienerspezifischen Basisdatensatzes 47 für ein Anbaugerät 3 bewirkt werden kann, d.h. eine Einstellung geändert werden, ändert. Aufgrund der Auswahl der Löschoption 74 "Delete" ("Löschen") als eine Einstelloption 69 werden in einer zweiten Bedien- und Anzeigeebene 72 die beiden hierarchisch höherstehenden Visualisierungsbereiche 61 und 62 durch einen Einstell- und Visualisierungsbereich 73 überblendet bzw. überlagert. Der Einstell- und Visualisierungsbereich 73 dient der Auswahl und/oder Einstellung von Einstellparametern 49, wozu auch das Löschen eines einzelnen Einstellparameters 49 bis hin zu einem vollständigen Datensatz zählen. Für die Auswahl und/oder Einstellung ist das Fahrerassistenzsystem 21 zu einer dialogbasierten, natürlichsprachigen Bestimmung der Einstellparameter 49 eingerichtet.

In dem zweiten Einstell- und Visualisierungsbereich 73 können neben den als Piktogramm ausgeführten Auswahloptionen 68 darüber hinaus auch Erläuterungen dargestellt werden. Im exemplarisch dargestellten Fall der Löschoption 74 der im Kontextfeld 73a zugehörige Kontext "Delete" ("Löschen") sowie das von der Auswahl betroffene Objekt, d.h. beispielsweise ein geladener Basisdatensatz 47 der Arbeitsmaschine 2, des Anbaugerätes 3 und/oder eines Arbeitsaggregates 29, 34.

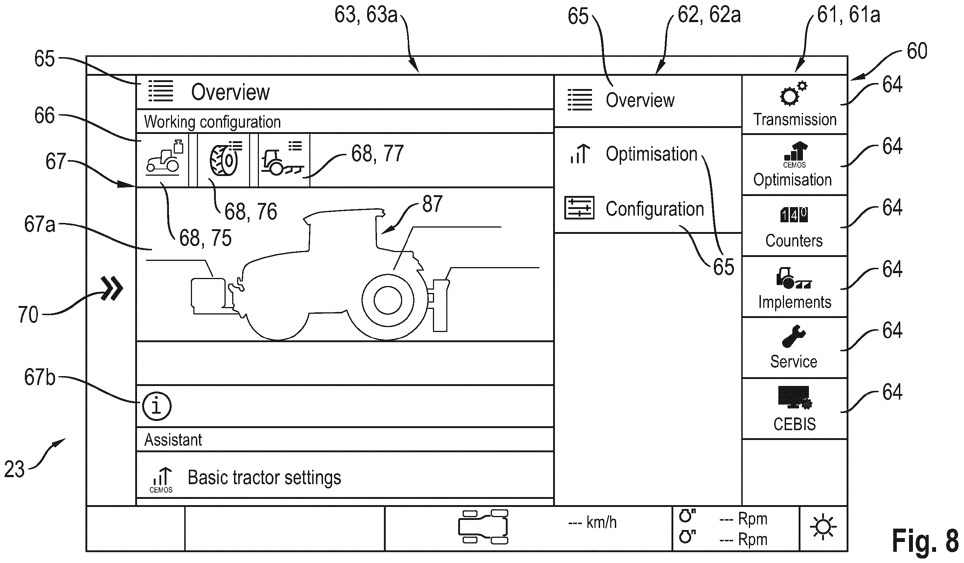

Fig. 8 zeigt exemplarisch die Auswahl des Hauptmenüpunktes 64 "Optimisation" ("Optimierung") im Visualisierungsbereich 61, welchem das Modul "Strategie" 38 und das Modul "Einstellungen" 39 und dessen Einzelmodule "Maschinendaten" 39a, "Basiseinstellungen" 39b, und "Arbeitsziel" 39c des Fahrerassistenzsystems 21 zur Abarbeitung zugeordnet sind, sowie die Auswahl des Menüpunktes 65 "Overview" ("Übersicht") im Visualisierungsbereich 62.

In dem im hierarchisch niedrigsten Visualisierungsbereich 63 angezeigten Menüband 67 sind Icons bzw. Piktogramme 75, 76, 77 als Auswahloptionen 68 dargestellt, welche die Einstellparameter Ballastierung (Piktogramm 75), Reifendruck, Reifengeometrie und Achslast (Piktogramm 76) sowie Basiseinstellungen (Piktogramm 77) für das zumindest eine Anbaugerät 3 betreffen. Unterhalb des Menübandes 67 wird in einem separaten Darstellabschnitt 67a abstrahiert die Arbeitsmaschine 2 oder das Anbaugerät 3 als Symbol 87 dargestellt sowie eine prinzipielle Zuordnung der Piktogramme 75, 76 und 77. Unterhalb des Darstellabschnitts 67a kann ein Informationsfeld 67b vorgesehen sein, in welchem zusätzliche Hinweise eingeblendet werden, die im Zusammenhang mit einer vorzuschlagenden Empfehlung für den aktuell anzupassenden Einstellparameter 49 stehen.

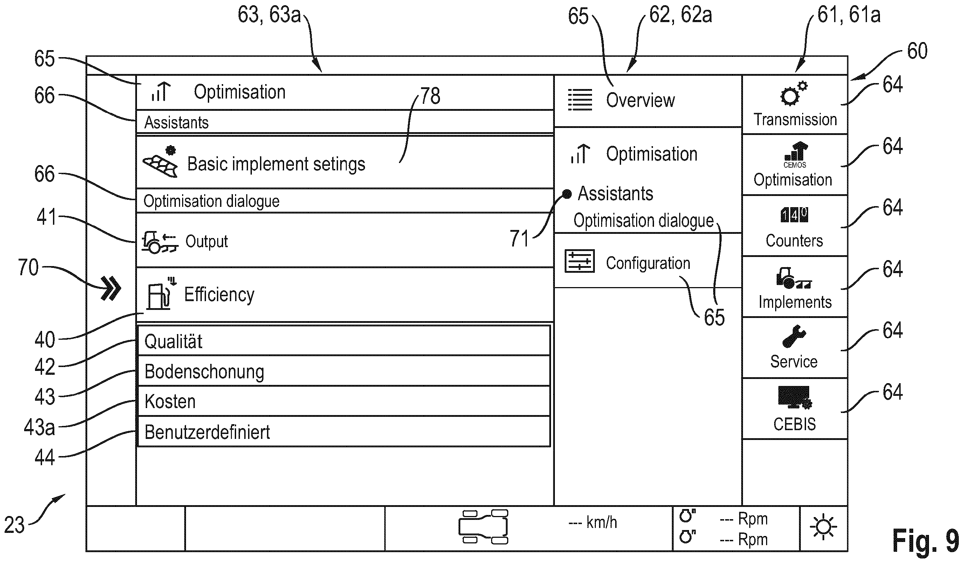

Fig. 9 zeigt exemplarisch die getroffene Auswahl des Hauptmenüpunktes 64 "Optimisation" ("Optimierung") im hierarchisch höchsten Visualisierungsbereich 61, sowie die Auswahl des gleichlautenden Menüpunktes 65 "Optimisation" ("Optimierung") im Visualisierungsbereich 62. Auch hier wird im Visualisierungsbereich 62 unterhalb des Menüpunktes 65 zusätzlich eine Übersicht der in der Submenüebene 63a des Visualisierungsbereiches 63 enthaltenen Submenüpunkte 66 dargestellt.

Die Auswahl eines der Submenüpunkte 66 im Visualisierungsbereich 63 führt zum wahlweisen Starten des Moduls "Strategie" 38 oder des Moduls "Basiseinstellung Maschinenanordnung" 39. Der Submenüpunkt 66 "Optimisation dialogue" ("Optimierungsdialog") umfasst die Strategien 40 "Effizienz" sowie "Leistung" 41. Der Submenüpunkt 66 "Assistants" ("Assistenten") umfasst das Modul "Basiseinstellung Maschinenanordnung" 39 und dessen Abarbeitung. Der ausgewählte Submenüpunkt 66 "Assistants" ("Assistenten") bietet hierfür einen Assistenten 78 "Basic implement setting" ("Grundeinstellung des Anbaugerätes") zur Auswahl an, welcher der dialogbasierten Konfiguration des zumindest einen Anbaugerätes 3 dient.

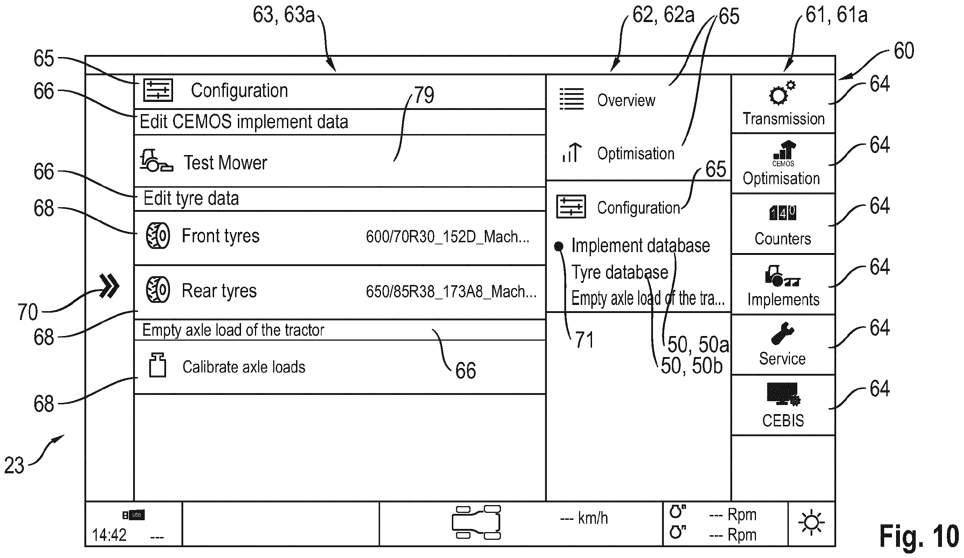

Fig. 10 zeigt exemplarisch die Auswahl des Menüpunktes 65 "Configuration" ("Konfiguration") im Visualisierungsbereich 62, sowie die Auswahl der Submenüpunkte 66, die dem Menüpunkt 65 "Configuration" ("Konfiguration") auswählbar zugeordnet sind. Im Visualisierungsbereich 63 ist im Dialogfeld 79 die Bezeichnung eines aktuell aus der Datenbank 50 abgerufenen Datensatzes des Anbaugerätes 3 dargestellt. Die Submenüpunkte 66 zeigen die im Rahmen des Menüpunktes 65 "Configuration" ("Konfiguration") zur Verfügung stehenden auswählbaren Auswahloptionen 68 an. Der Submenüpunkt 66 "Edit CEMOS implement data" ("CEMOS Gerätedaten bearbeiten") weist im Dialogfeld 79 die Bezeichnung des aus der Datenbank 50, die eine spezifische Anbaugerätedatenbank 55 für Anbaugeräte umfasst, ausgewählten Anbaugerätes 3, hier des Scheibenmähwerkes 4, aus. Bei dem Begriff "CEMOS" handelt sich um eine registrierte Marke der CLAAS KGaA mbH. Die anhand der Anbaugerätedatenbank 55 getroffene Auswahl wird durch den Auswahlindikator 71 hervorgehoben. Als Auswahloptionen 68 des Submenüpunktes 66 "Edit tyre data" ("Reifendaten bearbeiten") stehen die Auswahl und/oder Einstellung der Bereifung an Vorderachse 12 und Hinterachse 13 der Arbeitsmaschine 2 zur Verfügung. Zur Auswahl der jeweiligen Bereifung steht die Datenbank 50, die eine spezifische Reifendatenbank 56 umfasst, zur Verfügung. Als Auswahloptionen 68 des Submenüpunktes 66 "Empty axle load of the tractor" ("Achslast des Traktors im Leerzustand")" steht die Auswahloption 68" "Calibrate axle loads" ("Kalibrierung der Achslast") zur Verfügung, um die Achslast voreinzustellen.

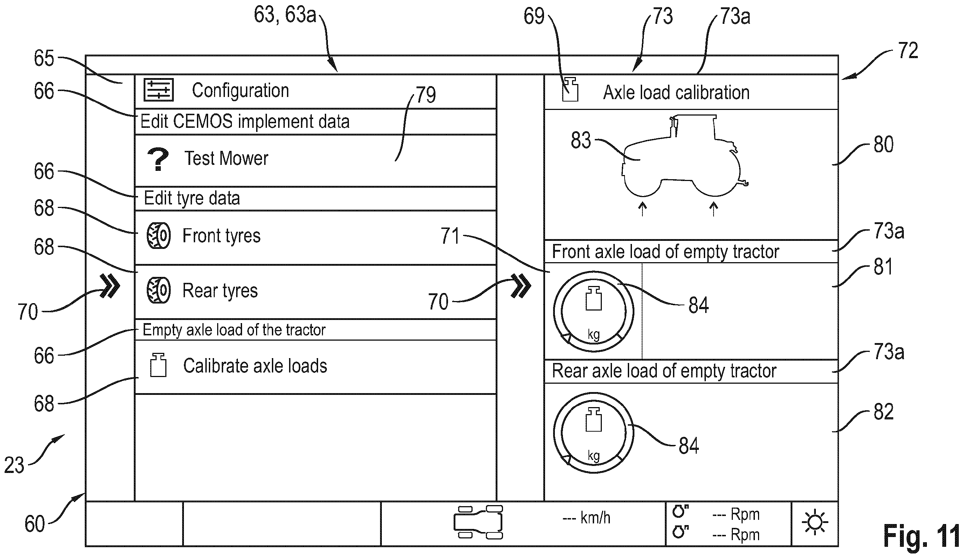

In Fig. 11 ist die Anzeige- und Bedieneinheit 23 nach der Auswahl einer der zur Verfügung stehenden Auswahloptionen 68, hier beispielhaft der Auswahloption "Calibrate axle loads" ("Kalibrierung der Achslast") dargestellt. Die Auswahl der Auswahloption 68 im hierarchisch niedrigsten Visualisierungsbereich 63 bewirkt, dass in der zweiten Bedien- und Anzeigeebene 72 die beiden hierarchisch höherstehenden Visualisierungsbereiche 61 und 62 durch den Einstell- und Visualisierungsbereich 73 überblendet bzw. überlagert werden.

Im Einstell- und Visualisierungsbereich 73 der zweiten Bedien- und Anzeigeebene 72 werden, in auf mehrere Teilbereiche 80, 81, 82 verteilt, die aufgrund der gewählten Auswahloption 68, hier beispielhaft der Auswahloption "Calibrate axle loads" ("Kalibrierung der Achslast"), die damit korrespondierende einzustellende Komponente im Teilbereich 80, bei der es sich im vorliegenden Fall um die Arbeitsmaschine 2 handelt, dargestellt. Die einzustellende Komponente wird im Teilbereich 81 als Icon oder Piktogramm 83 dargestellt. Die Auswahloption 68 "Calibrate axle loads" ("Kalibrierung der Achslast") kann dann zur Verfügung stehen, wenn für eine zu betreibende und optimierende Maschinenanordnung 1 hinsichtlich der Arbeitsmaschine 2 keine Informationen oder nur unvollständige Informationen zu Einstellparametern 49 hinterlegt sind, welche die Achslast betreffen. Den Teilbereichen 80, 81, 82 können Kontextfelder 73a zugeordnet sein, welche Erläuterungen in grafischer und/oder textbasierter Form enthalten.

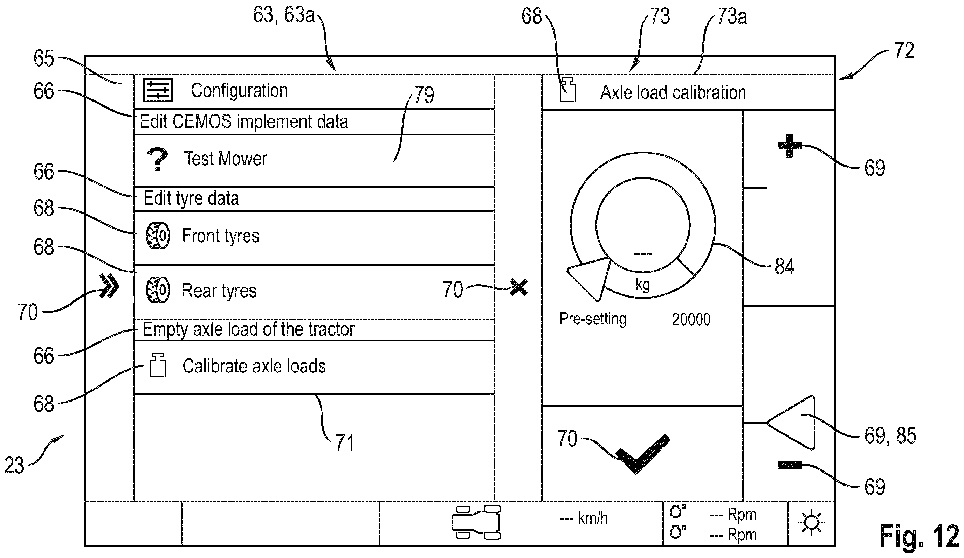

In den Teilbereichen 81 und 82 sind die spezifischen Parameter der einzustellenden Komponente benannt, hier die "Front axle load" ("Vorderachslast") im Teilbereich 81 und die die "Rear axle load" ("Hinterachslast") im Teilbereich 82. In den Teilbereichen 81 und 82 wird zudem der zugehörige eingestellte Wert, hier für die eingestellte Achslastverteilung, mittels eines Anzeigefeldes 84 dargestellt. Das jeweilige Anzeigefeld 84 ist als Kombinationsfeld ausgeführt. Die Ausführung des Anzeigefeldes 84 als Kombinationsfeld ermöglicht die Darstellung des eingestellten Wertes als Absolutwert sowie in grafischer Form, beispielsweise in der Form eines Ringdiagrammes. Durch die Auswahl der Einstelloption 69 "Axle load calibration" (Achslastkalibrierung") im Teilbereich 80, beispielsweise durch Berührung der Oberfläche der Bedien- und Anzeigeeinheit 23, durch virtuelle Bedienelemente und/oder durch eine manuelle Betätigung von elektromechanischen Bedienelementen, die der Bedien- und Anzeigeeinheit 23 zugeordnet sind, wird die Darstellung in dem Einstell- und Visualisierungsbereich 73 der zweiten Bedien- und Anzeigeebene 72 geändert, wie in Fig. 12 exemplarisch dargestellt ist. Die virtuellen und/oder elektromechanischen Bedienelemente können beispielsweise als Schalter, Taster, Drehrad, Schieber, Dreh-Druck-Schalter und dergleichen mehr ausgeführt sein.

In Fig. 12 ist der geänderte Einstell- und Visualisierungsbereich 73 der zweiten Bedien- und Anzeigeebene 72 der Anzeige- und Bedieneinheit 23 nach Auswahl der Einstelloption 69 "Achslastkalibrierung" dargestellt. Im Einstell- und Visualisierungsbereich 73 ist ein Kontextfeld 73a dargestellt der mit der gewählten Auswahloption 68 korrespondiert. Unterhalb des Kontextfeldes 73a befindet sich eine grafische Visualisierung zumindest eines Einstellparameters, hier der eingestellten Achslastverteilung Die Einstellung eines Wertes für die Achslastverteilung erfolgt mittels der Einstelloptionen 69 und der Bedienoptionen 70, die in dem Einstell- und Visualisierungsbereich 73 dargestellt sind. Während die beispielhaft als Plus-Symbol ("+") und Minus-Symbol "-" ausgeführten Einstelloptionen 69 der Einstellung des Wertes für die Achslastverteilung dienen, lässt sich mittels der Bedienoptionen 70 ein eingestellter Wert bestätigen und abspeichern oder der Vorgang als solcher abbrechen. Durch die Betätigung einer der Bedienoptionen gelangt die Bedienperson 37 zur vorherigen Darstellung gemäß Fig. 11 zurück. Im Einstell- und Visualisierungsbereich 73 kann zusätzliche eine als Marker 85 ausgeführte Einstelloption 69 vorgesehen sein. Die Bedienung des Markers 85 kann durch eine lineare Schiebebewegung erfolgen.

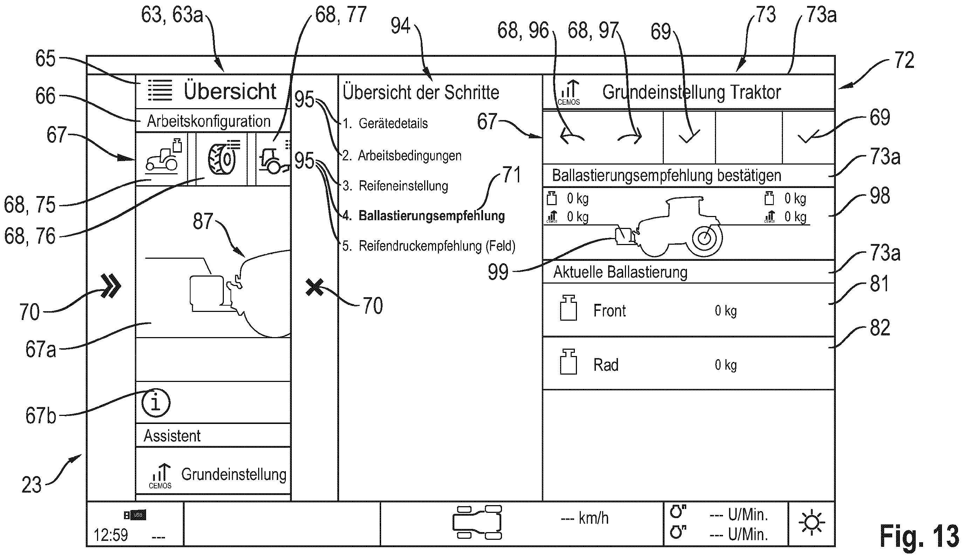

In Fig. 13 ist beispielhaft eine Ansicht der Anzeige- und Bedieneinheit 23 dargestellt, welche sich einstellen kann, wenn die Abarbeitung des Einzelmoduls "Maschinendaten" 39b durchgeführt wird. Im Einstell- und Visualisierungsbereich 73 ist beispielhaft ein Teil des Ablaufs dargestellt, welcher beim Ausführen des Verfahrensschrittes 54a zur Basiseinstellung der Arbeitsmaschine 2 vorgenommen wird. Hierzu wird der Einstell- und Visualisierungsbereich 73 aufgeteilt, um in einem separaten Segment 94 des Einstell- und Visualisierungsbereiches 73 eine Übersicht von einem oder mehreren Einstellschritten 95, der oder die von der Bedienperson 37 beim Ausführen des Verfahrensschrittes 54a zur Basiseinstellung der Arbeitsmaschine 2 abzuarbeiten sind, darzustellen. Mittels der im Dialogfeld 67 angezeigten Auswahloptionen 68, die als Richtungspfeile 96, 97 ausgeführt sind, kann die Bedienperson 37 zwischen den Dialogabfragen des jeweiligen Einstellschrittes 95 sowie den Einstellschritten 95 selbst navigieren. Dabei erlauben die Richtungspfeile 96, 97 ein Vor- und Zurückspringen. Ein jeweils aktiver Einstellschritt 95 ist hervorgehoben dargestellt, hier der Einstellschritt 95 "Ballastierungsempfehlung". Die Bezeichnung Einstellschritt 95 ist in der Weise zu verstehen, dass sich dahinter eine oder mehrere Dialogabfragen verbergen. Die Beantwortung aller vorgesehener Dialogabfragen eines Einstellschrittes 95 durch die Bedienperson 37 im Zuge der Verfahrensschritte 54 bis 58 kann zwingend sein, um zum nachfolgenden Einstellschritt 95 zu gelangen.

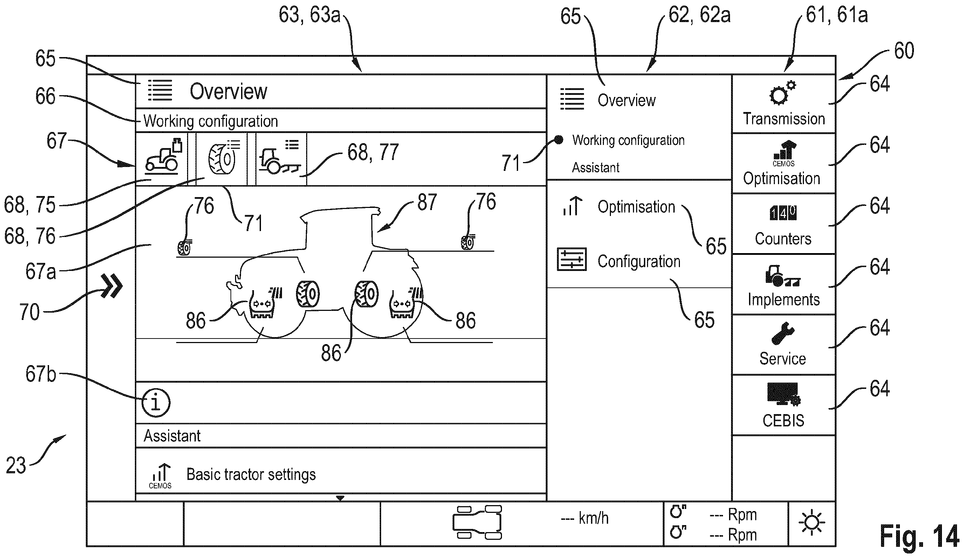

In Fig. 14 ist exemplarisch die Auswahl des Hauptmenüpunktes 64 "Optimisation" ("Optimierung") gemäß Fig. 8 im Visualisierungsbereich 61 dargestellt, sowie die Auswahl des Menüpunktes 65 "Overview" ("Übersicht") im Visualisierungsbereich 62. In dem im hierarchisch niedrigsten Visualisierungsbereich 63 ist mittels des angezeigten Menübandes 67 als Auswahloptionen 68 die Arbeitskonfiguration für die Einstellparameter Reifendruck, Reifengeometrie und Achslast der Arbeitsmaschine 2, visualisiert durch das im Menüband 67 hervorgehoben dargestellte Piktogramm 76, ausgewählt. In dem separaten Darstellabschnitt 67a werden entsprechend der gewählten Auswahloptionen 68 abstrahierte Icons oder Piktogramme 86 eingeblendet, welche im dargestellten Ausführungsbeispiel die mit der Auswahloption 68 verbundenen Einstellparameter Reifendruck und Reifengeometrie veranschaulichen. Die hier vornehmbaren Einstellungen sind im Einzelmodul "Basiseinstellungen" 39b enthalten.

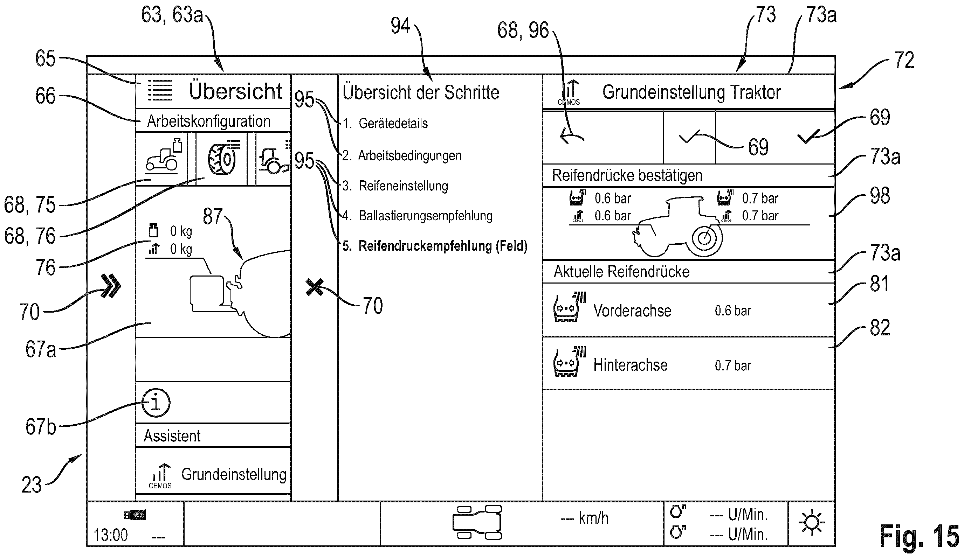

In Fig. 15 ist beispielhaft eine Ansicht der Anzeige- und Bedieneinheit 23 dargestellt, welche sich einstellen kann, wenn im Zuge der Abarbeitung des Einzelmoduls "Maschinendaten" 39b der Einstellschritt 95 "Ballastierungsempfehlung" durchgeführt wurde und zum nächsten Einstellschritt 95 "Reifendruckempfehlung (Feld)" übergegangen wird.

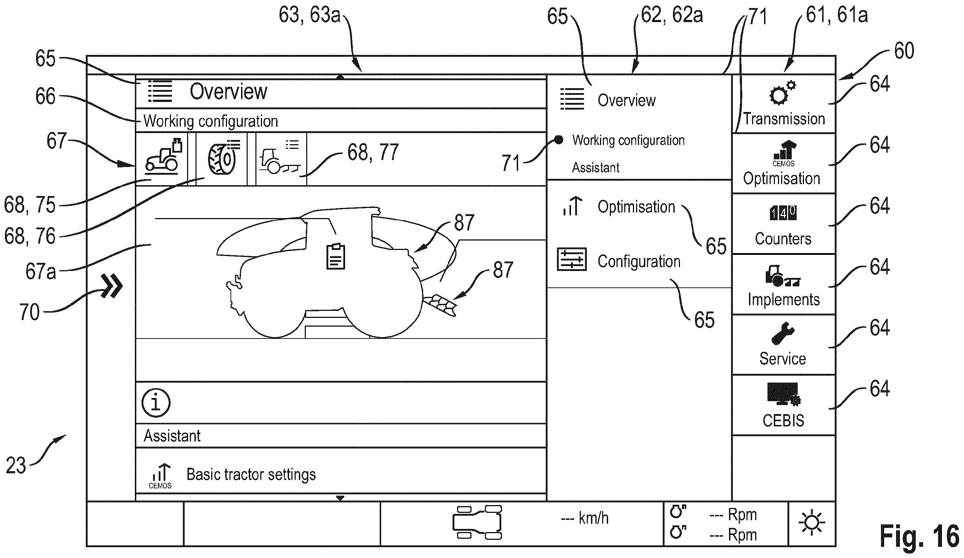

In Fig. 16 ist exemplarisch die Auswahl des Hauptmenüpunktes 64 "Optimisation" ("Optimierung") gemäß Fig. 8 im Visualisierungsbereich 61 dargestellt, sowie die Auswahl des Menüpunktes 65 "Overview" ("Übersicht") im Visualisierungsbereich 62. In dem im hierarchisch niedrigsten Visualisierungsbereich 63 ist mittels des angezeigten Menübandes 67 als Auswahloptionen 68 die Arbeitskonfiguration getroffene Basiseinstellungen (Piktogramm 77) für das zumindest eine Scheibenmähwerk 4, visualisiert durch das im Menüband 67 hervorgehoben dargestellte Piktogramm 77, ausgewählt.

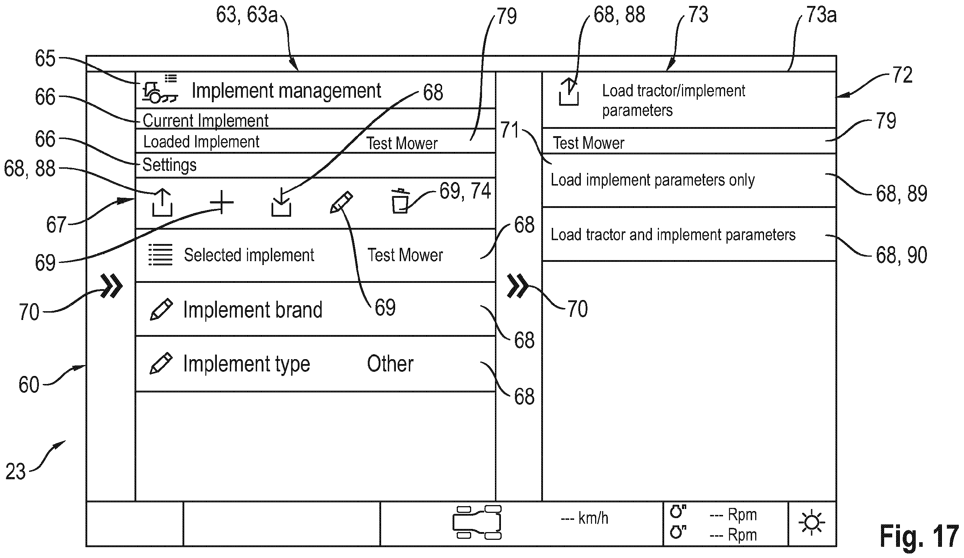

Fig. 17 zeigt eine Ansicht der Anzeige- und Bedieneinheit 23 gemäß Fig. 6, welche durch Betätigung einer der Auswahloptionen 68, hier einer Auswahloption "load tractor/implement parameters" ("Laden Einstellparameter Arbeitsmaschine/ Anbaugerät") 88, das auswählbare Laden eines bestehenden Datensatzes 46, 47 für eine Arbeitsmaschine 2 und/oder ein Scheibenmähwerk 3, 4 dargestellt wird. Dabei werden im Einstell- und Visualisierungsbereich 73 der zweiten Bedien- und Anzeigeebene 72 unterhalb des Kontextfeldes 73a entsprechend der Betätigung der Auswahloption 68, 88 aus dem Menüband 67 die zur Verfügung stehenden Einstelloptionen 89 "Load implement parameters only" ("Nur Laden der Anbaugeräteparameter") oder "Load tractor and implement parameteres" ("Laden der Arbeitsmaschinen- und Anbaugeräteparameter") 90.

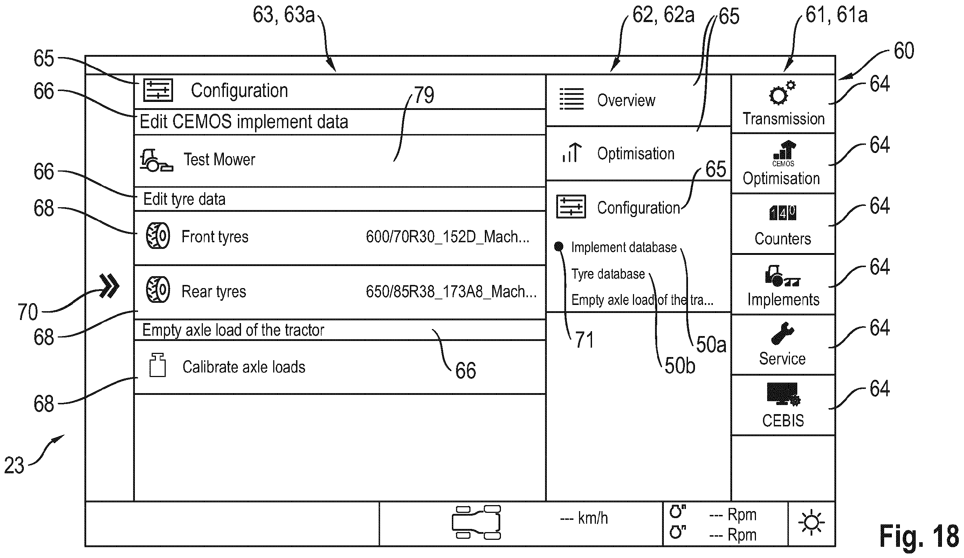

Die Darstellung in Fig. 18 zeigt eine Ansicht der Anzeige- und Bedieneinheit 23 gemäß Fig. 10, welche durch die Auswahl des Hauptmenüpunktes 64 "Optimisation" und des zugehörigen Menüpunktes 65 "Configuration" ("Konfiguration") aktiviert bzw. dargestellt wird. Im Visualisierungsbereich 63 ist im Dialogfeld 79 die Bezeichnung eines aktuell aus der Datenbank 50, hier der Anbaugerätedatenbank 50a, abgerufenen Datensatzes 46, 47 des Anbaugerätes 3 dargestellt. Durch die Anwahl respektive das Berühren des Dialogfeld 79 werden in der zweiten Bedien- und Anzeigeebene 72 die beiden hierarchisch höherstehenden Visualisierungsbereiche 61 und 62 durch den Einstell- und Visualisierungsbereich 73 der zweiten Bedien- und Anzeigeebene 72 überblendet bzw. überlagert, was in Fig. 17 dargestellt ist. In dem Einstell- und Visualisierungsbereich 73 wird unterhalb des Kontextfeldes 73a ein Dialogband 67 angezeigt, welches analog dem Dialogband 67 des hierarchisch niedrigsten Visualisierungsbereich 63 der ersten Bedien- und Anzeigeebene 60 gestaltet ist. In dem Dialogband 67 des Einstell- und Visualisierungsbereiches 73 werden die verfügbaren Einstelloptionen 69 dargestellt, hier ein Icon oder Piktogramm 91, welches die Editierfunktion bildet sowie das Icon oder Piktogramm 92, dessen Auswahl das Verlassen des Einstell- und Visualisierungsbereiches 73 der zweiten Bedien- und Anzeigeebene 72 ermöglicht. Unterhalb eines Zusatzfeldes 93 "Acitve implement" ("Aktives Anbaugerät") wird im Dialogfeld 79 die Bezeichnung des aktuell aus der Datenbank 50 abgerufenen Datensatzes 46, 47 des Anbaugerätes 3 dargestellt. Wie in Fig. 17 weiter dargestellt, ist im Dialogmenü 67 die durch das Icon oder Piktogramm 91 dargestellte Einstelloptionen 69 aktiviert.

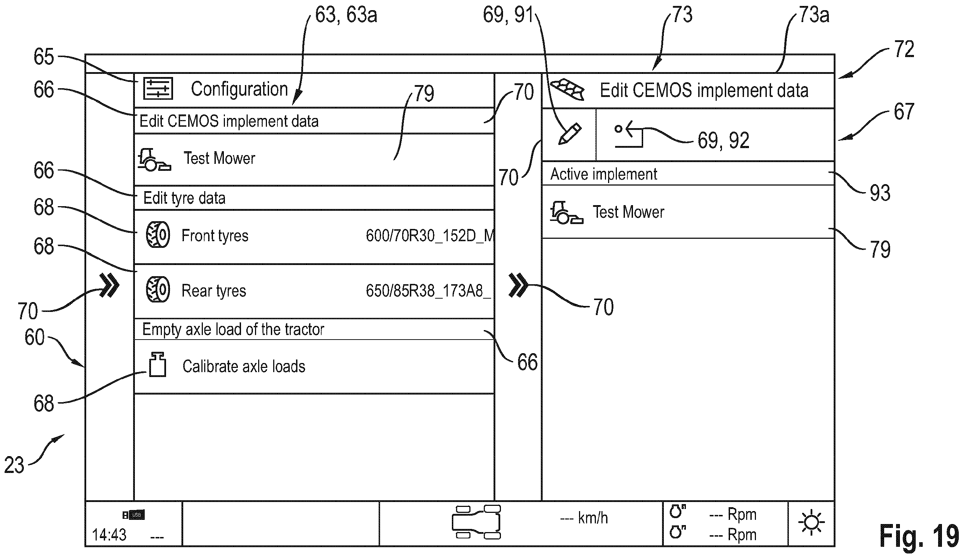

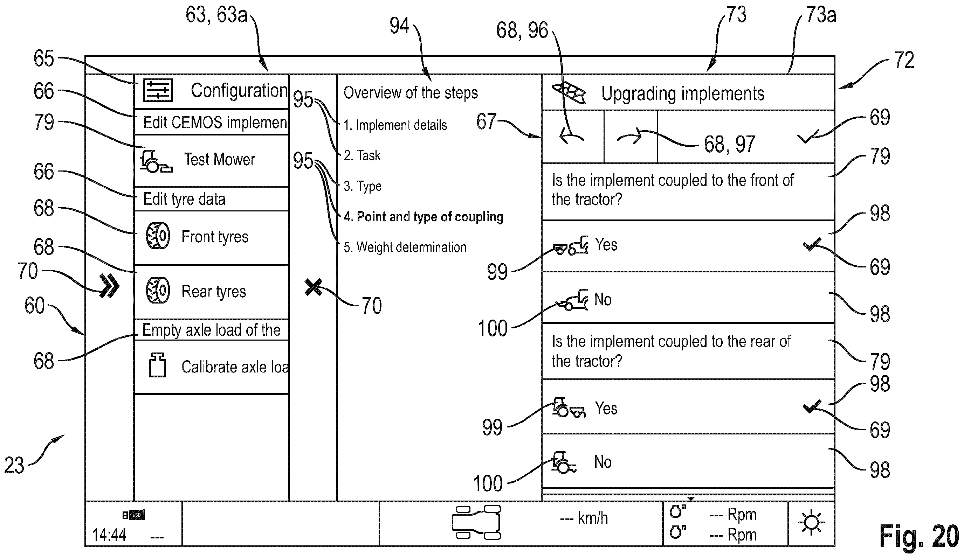

In Fig. 20 ist die Ansicht der Anzeige- und Bedieneinheit 23 dargestellt, welche sich aus der Betätigung bzw. Auswahl des Icons oder Piktogramms 91 im Dialogmenü 67 gemäß Fig. 19 ergibt. Im Einstell- und Visualisierungsbereich 73 ist beispielhaft ein Teil des Ablaufs dargestellt, welcher beim Ausführen des Verfahrensschrittes 53 zur Basiseinstellung eines nachgerüsteten Scheibenmähwerkes 4 vorgenommen wird. Hierzu wird der Einstell- und Visualisierungsbereich 73 aufgeteilt, um in einem separaten Segment 94 des Einstell- und Visualisierungsbereiches 73 eine Übersicht von einem oder mehreren Einstellschritten 95, der oder die von der Bedienperson 37 beim Ausführen des Verfahrensschrittes 53 zur Basiseinstellung abzuarbeiten sind, darzustellen. Zugleich werden mit dem jeweiligen Einstellschritt 95 korrespondierende Abfragen in den Dialogfelder 79 sowie Einstelloptionen 69 und/oder Auswahloptionen 68 in den zugehörigen Anzeigesegmenten 98 dargestellt. In Fig. 20 ist dies beispielhaft an dem Schritt "Point and type of coupling" ("Ort und Art der Anhängung") als Teil der vorzunehmenden Basiseinstellung erläutert. In den Dialogfeldern 79 wird schrittweise abgefragt, an welchem Ort das einzustellende Scheibenmähwerk 3, 4 angeordnet ist. Mittels der im Dialogfeld 67 angezeigten Auswahloptionen 68, die als Richtungspfeile 96, 97 ausgeführt sind, kann die Bedienperson 37 zwischen den Dialogfeldern 79 navigieren. Dabei erlauben die Richtungspfeile 96, 97 ein vor- und zurückspringen. Mit der Betätigung der Einstelloption 69 wird eine getätigte Eingabe zu einem Einstellschritt 95 durch die Bedienperson 37 abgeschlossen, um die eingegebenen Informationen abzuspeichern.

Die Anzeige der in den Dialogfeldern 79 und den zugehörigen Anzeigesegmenten 98 dargestellten Einstelloptionen 69 und/oder Auswahloptionen 68 variieren dabei in Abhängigkeit von dem jeweils auszuführenden Einstellschritt 95. In den Anzeigesegmenten 98 wird korrespondierend mit den möglichen Einstelloptionen 69 und/oder Auswahloptionen 68 eine grafische Darstellung 99, 100 zumindest einer einzustellenden Komponente, beispielsweise der Arbeitsmaschine 2 und /oder des Anbaugerätes 3, wie des Scheibenmähwerkes 4, als Ganzes, oder einzelner Arbeitsaggregate 29, 34, eingeblendet, um den Kontext der im Dialogfeld 79 angezeigten natürlichsprachigen Fragestellung sowie die zugehörige Einstelloptionen 69 und/oder Auswahloptionen 68 zusätzlich zu veranschaulichen. Die Auswahl erfolgt durch Berühren des Anzeigesegmenten 98 oder durch die Betätigung eines Bedienelementes der Anzeige- und Bedieneinheit 23.

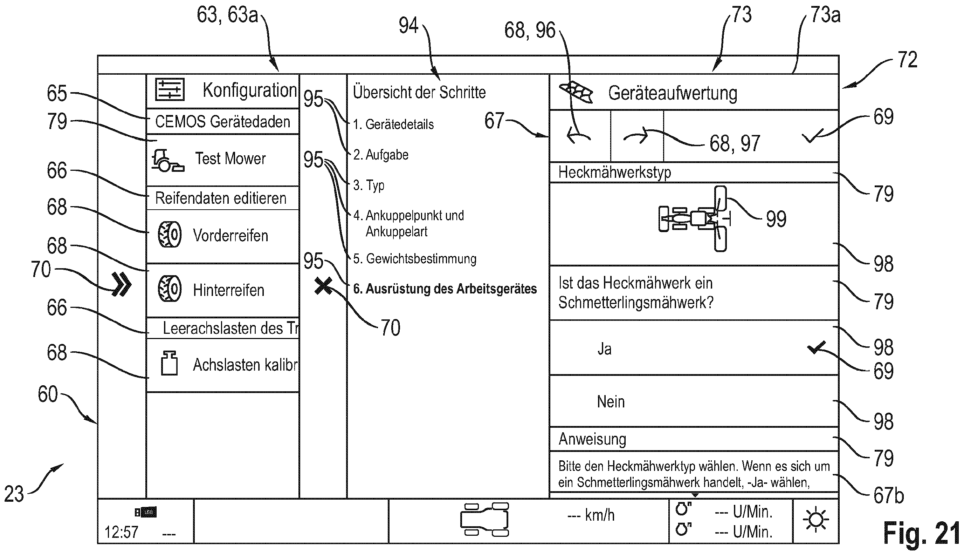

In den Fig. 21 bis 30 sind weitere exemplarisch einzelne Einstellschritte 95 dargestellt, die im Zuge der Ausführung des Einzelmoduls "Arbeitsziele" 39c in den Verfahrensschritten 57 oder 58 abgearbeitet werden.

Fig. 21 zeigt den abzuarbeitenden Einstellschritt 95 "Ausrüstung des Arbeitsgerätes" beispielhaft für die Dialogabfrage, um welchen Heckscheibenmähwerktyp es sich handelt. Hierzu wird in einem Anzeigesegment 98 unterhalb eines Dialogfeldes 79 eine für den Heckscheibenmähwerktyp spezifische grafische Darstellung 99 angezeigt, um der Bedienperson 37 zur Vereinfachung der Beantwortung der Dialogabfrage den Gegenstand zu veranschaulichen. Durch das Berühren eines der beiden Anzeigesegmente 98, welche die Antwort auf die Dialogabfrage enthalten, wird eine Auswahl getroffen und durch die Einstelloptionen 69 als aktiv gekennzeichnet. Mit der Beantwortung dieser Dialogabfrage wird die Auswahloption 68 im zugehörigen Menüband 67 des Einstell- und Visualisierungsbereiches 73 aktiviert, um zu einem nachfolgenden Einstellschritt 95 zu gelangen oder die Ausführung des Einzelmoduls "Arbeitsziele" 39c abschließen zu können, um zum Verfahrensschritt 59 "Modulende" gemäß Fig. 5 zu gelangen.

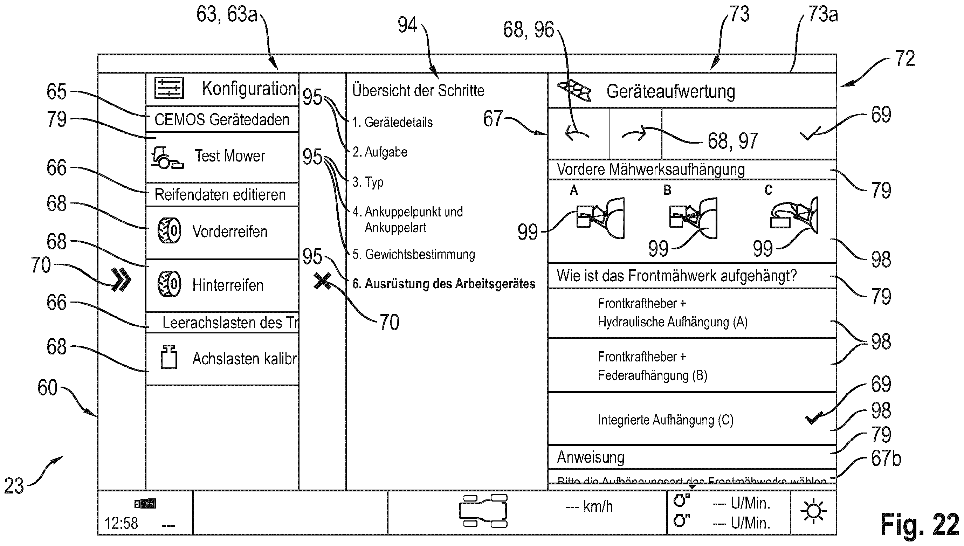

Fig. 22 zeigt den ausgewählten Einstellschritt 95 "Ausrüstung des Arbeitsgerätes" beispielhaft für die Dialogabfrage, wie das Frontscheibenmähwerk 3 an der Arbeitsmaschine 2 angeordnet ist. Hierzu werden in einem Anzeigesegment 98 unterhalb eines Dialogfeldes 79 mehrere grafische Darstellungen 99 angezeigt, welche die möglichen Arten der Anordnung an der Arbeitsmaschine 2 grafisch veranschaulichen. Der grafischen Veranschaulichung sind in dem weiteren Anzeigesegmente 98 die mit den grafischen Darstellungen 99 korrespondierenden Antwortmöglichkeiten dargestellt.

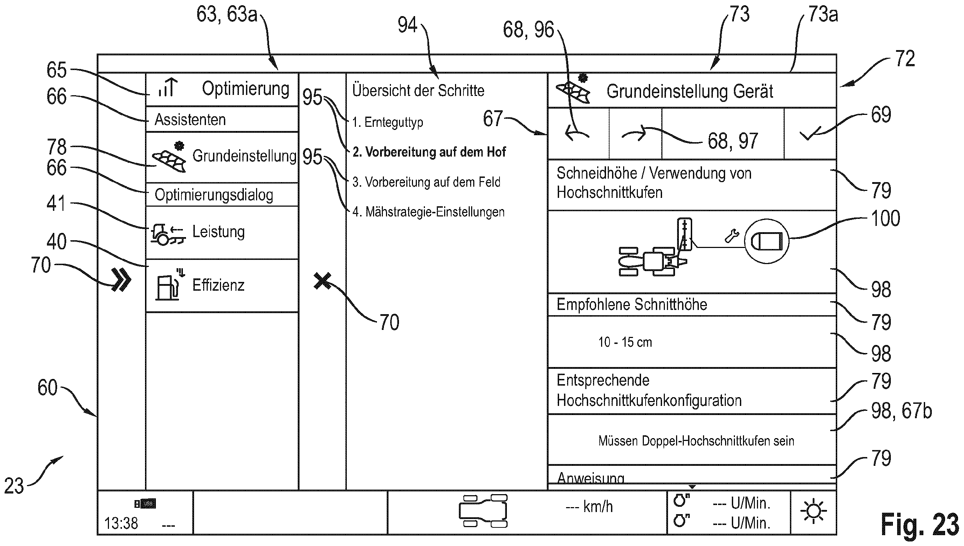

Fig. 23 zeigt eine Ansicht der Bedien-und Anzeigeeinheit 23, welche sich bei Auswahl des Submenüpunktes 66 "Assistants" ("Assistenten") gemäß Fig. 9 einstellt. Der Assistent 78 "Basic implement setting" ("Grundeinstellung des Anbaugerätes") umfasst wieder mehrere abzuarbeitende Einstellschritte 95, welcher der dialogbasierten Konfiguration des zumindest einen Scheibenmähwerkes 3, 4 im Zuge des Verfahrensschrittes 58 dienen. Hier ist beispielhaft der Einstellschritt 95 "Vorbereitung auf dem Hof" aktiv. Im Einstell- und Visualisierungsbereich 73 werden beispielhaft Informationen zur Dialogabfrage dargestellt, welche Schneidhöhe eingestellt werden soll und ob eine Verwendung von Hochschnittkufen erforderlich ist. Hierzu wird in einem Anzeigesegmente 98 unterhalb eines Dialogfeldes 79 eine für die Anordnung von Hochschnittkufen am Heckscheibenmähwerk 4 spezifische grafische Darstellungen 99 angezeigt. In den weiteren Dialogfeldern 79 und Anzeigesegmenten 98 werden eine empfohlene Schnitthöhe sowie eine für die Schnitthöhe spezifische Konfiguration der Hochschnittkufen dargestellt.

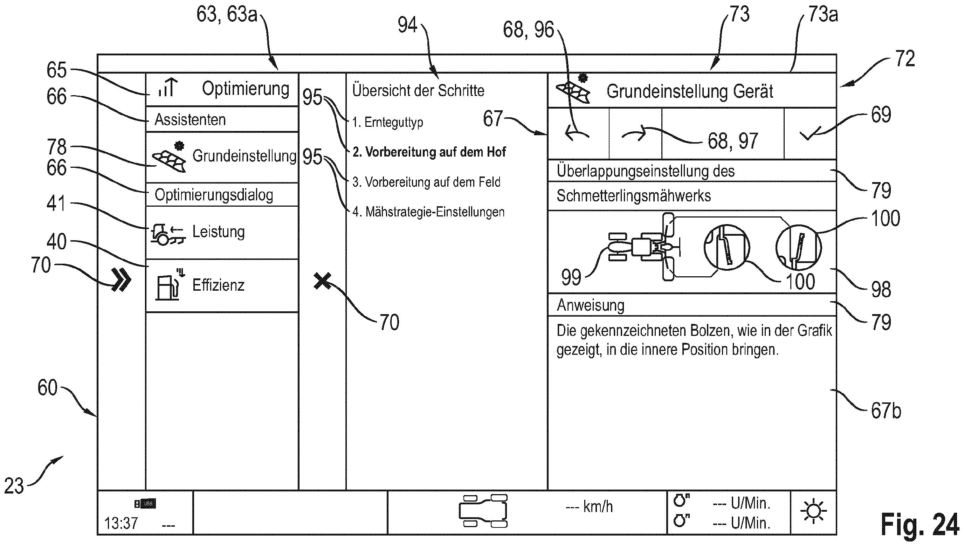

Fig. 24 zeigt den ausgewählten Einstellschritt 95 "Vorbereitung auf dem Hof" beispielhaft für einen Dialog die Überlappungseinstellung einer als Schmetterlingskombination ausgeführten Anordnung zweier Heckscheibenmähwerke 4.

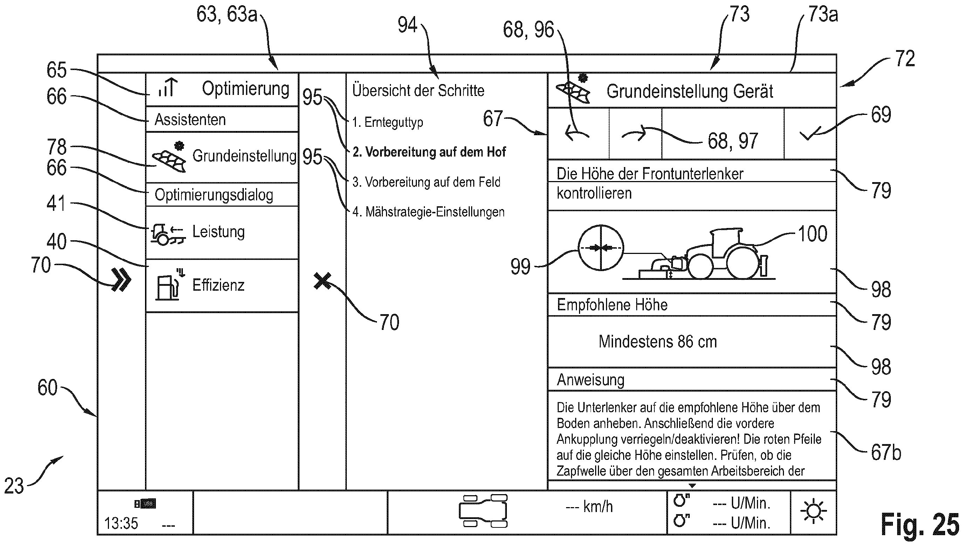

Fig. 25 zeigt ebenfalls den ausgewählten Einstellschritt 95 "Vorbereitung auf dem Hof" beispielhaft für den Hinweisdialog der Kontrolle der Höheneinstellung der Unterlenker des Hubwerkes 10. Neben einer empfohlenen Höhe, werden im Informationsfeld 67b zusätzliche textliche Hinweise oder Anweisungen gegeben, wie die Einstellung vorzunehmen ist. Ergänzende bzw. erläuternde visuelle Hinweise sind in einem der Anzeigesegmente 98 dargestellt.

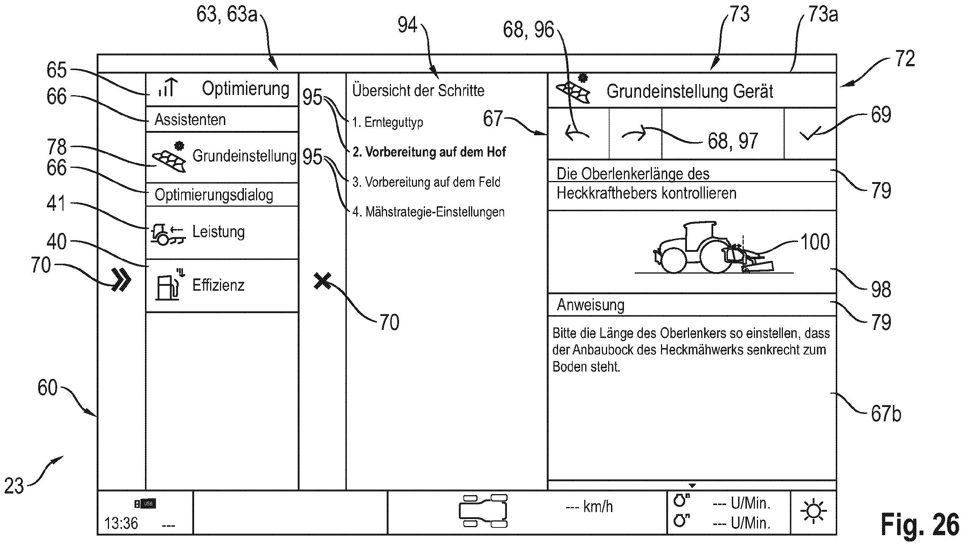

Fig. 26 zeigt weiterhin den ausgewählten Einstellschritt 95 "Vorbereitung auf dem Hof" beispielhaft für den Hinweisdialog der Kontrolle der Oberlenkerlänge des heckseitigen Hubwerkes 11 analog Fig. 25.

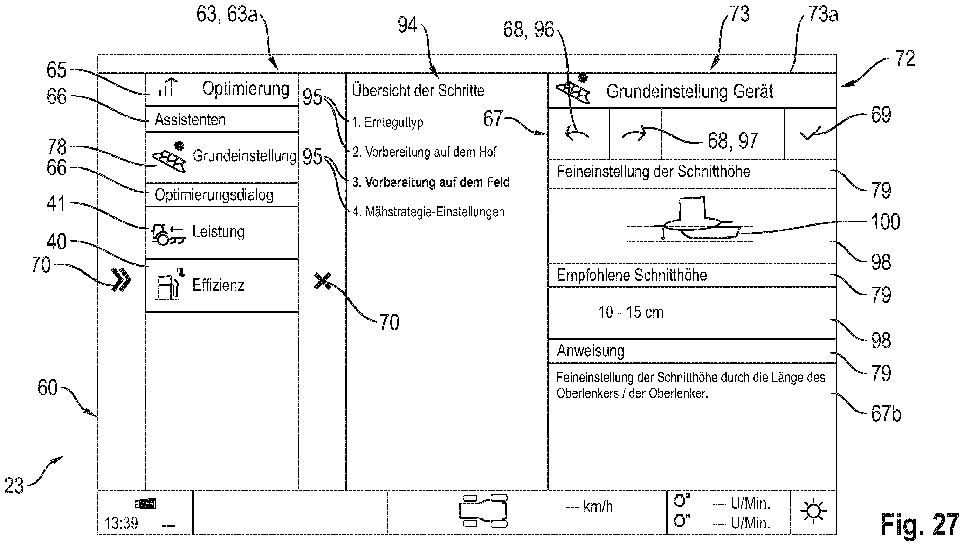

Fig. 27 zeigt den ausgewählten Einstellschritt 95 "Vorbereitung auf dem Feld" beispielhaft für einen Dialog zur Feineinstellung der Schnitthöhe, die zu einem früheren Zeitpunkt in dem vorangehenden Einstellschritt 95 "Vorbereitung auf dem Hof" eingestellt wurde.

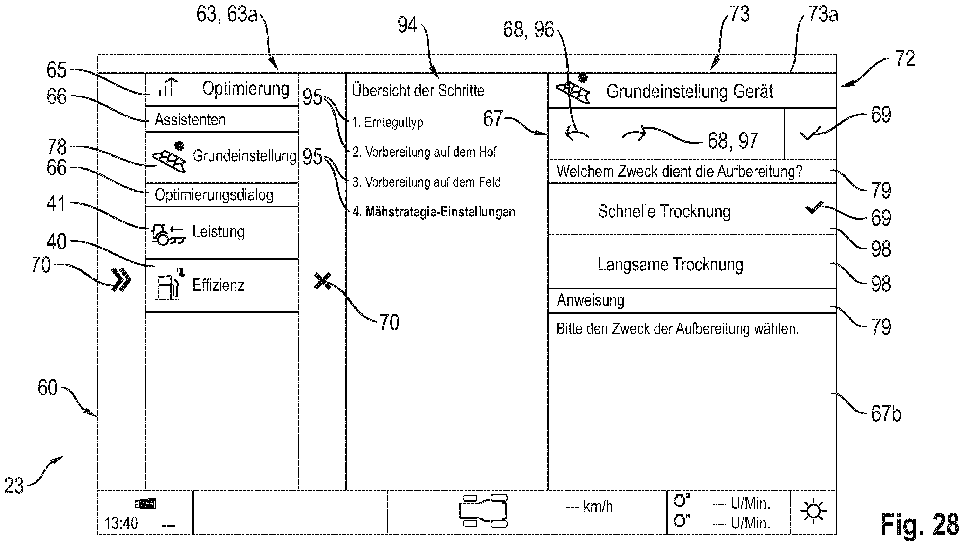

Fig. 28 zeigt den ausgewählten Einstellschritt 95 "Mähstrategie-Einstellungen" und damit verbundene Auswahl - bzw. Einstelloptionen, die in den Anzeigesegmenten 98 dargestellt und auswählbar sind. So wird beispielsweise im Dialogfeld 79 die Bedienperson 39 nach dem Zweck der Aufbereitung gefragt, sofern eine entsprechende Zusatzausstattung 7 an dem oder den Scheibenmähwerken 3, 4 vorhanden ist. Fehlt eine solche Zusatzausstattung 7, so entfällt auch der damit korrespondierende Dialog. In den nachfolgend angeordneten Anzeigesegmenten 98 sind die Auswahl - bzw. Einstelloptionen dargestellt, hier beispielhaft die Optionen "Schnelle Trocknung" oder "Langsame Trocknung". Die durch die Bedienperson 37 getroffene Auswahl ist optisch hervorgehoben und durch die Einstelloption 69 als ausgewählt und aktiv gekennzeichnet.

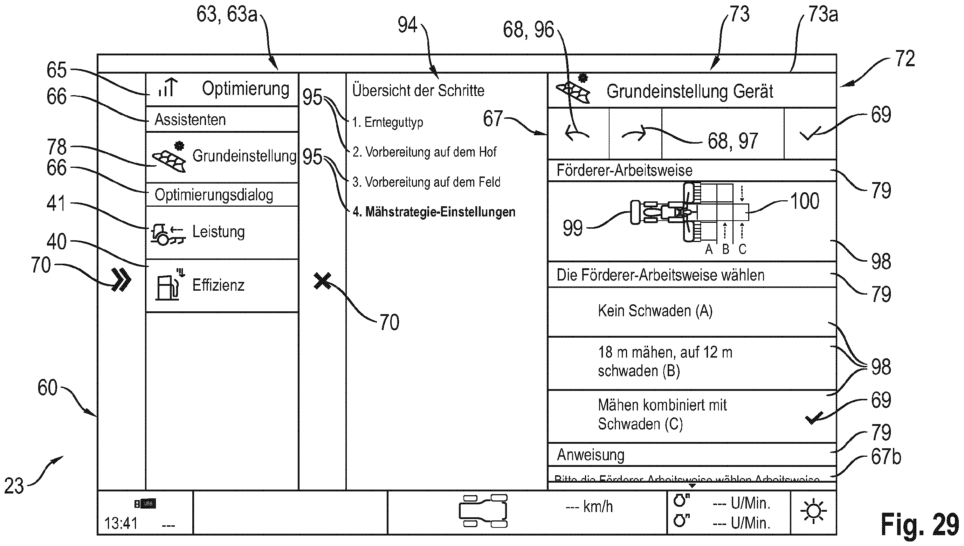

In Fig. 29 ist eine weitere Dialogabfrage für den ausgewählten Einstellschritt 95 "Mähstrategie-Einstellungen" dargestellt. Im Dialogfeld 79 wird die Bedienperson 39 nach der Arbeitsweise der Querfördervorrichtungen 9 an den Heckscheibenmähwerken 4 gefragt, sofern diese vorhanden sind. Auch hier werden in den Dialogfeldern 79 und den zugehörigen Anzeigesegmenten 98 die möglichen Arbeitsweisen der Querfördervorrichtungen 9 optisch anhand grafischer Darstellungen 99, 100 sowie mit diesen korrespondierend beschriebenen Arbeitsweisen erläutert.

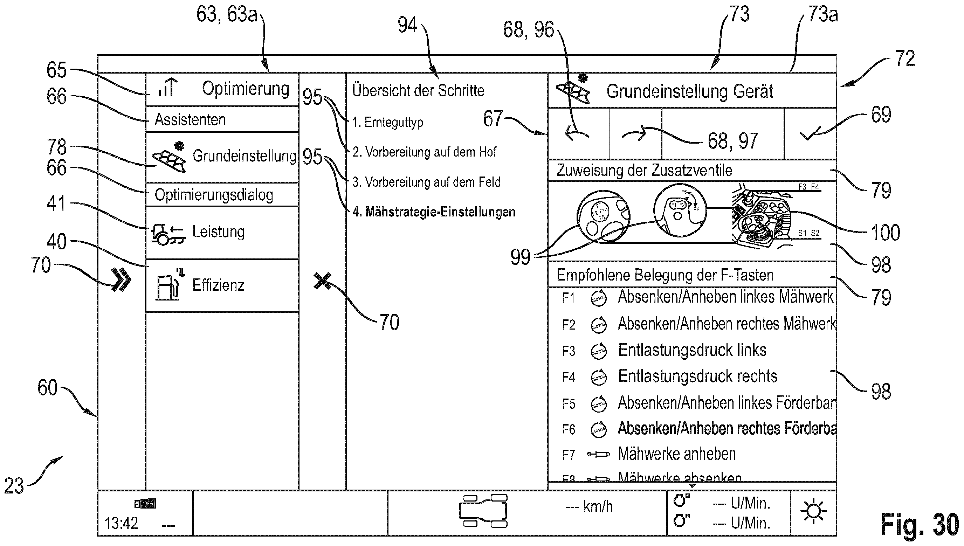

In Fig. 30 ist eine weitere Dialogabfrage für den ausgewählten Einstellschritt 95 "Mähstrategie-Einstellungen" dargestellt. Diese Dialogabfrage hat die Einstellung und Aktivierung einer Belegungszuordnung von Funktionen für manuell zu betätigende Bedienelemente, insbesondere Funktionstasten, einer als Multifunktionshebel ausgeführten Bedienvorrichtung der Arbeitsmaschine 2 für das zumindest eine Anbaugerät 3 respektive Scheibenmähwerk 4 zum Gegenstand. Es werden empfohlene Belegungen der Funktionstasten zur Auswahl gestellt, welche in einem Dialogfeld 79 und dem zugehörigen Anzeigesegment 98 dargestellt bzw. beschrieben werden. Die textliche Erläuterung der Zuordnung wird auch hier visuell durch grafische Darstellungen 99, 100 in einem weiteren Anzeigesegment 98 unterstützt.

Das Modul "Strategie" 38 gemäß Fig. 4 umfasst ebenfalls die natürlichsprachige, dialogbasierte Bestimmung von einzustellenden und/oder auszuwählenden Einstellparametern 49, die durch das Fahrerassistenzsystem 21 ermittelt werden. Die Anzeige- und Bedieneinheit 23 dient in identischer Weise der Visualisierung des natürlichsprachigen Dialoges für die Ermittlung und Einstellung des oder der einzustellenden und/oder auszuwählenden Einstellparameter 49. Auf der Grundlage der Grundeinstellung der spezifischen Maschinenanordnung 1, die durch das Ausführen der Einzelmodule 39a, 39b, 39c des Modules "Einstellungen" 39 ermittelt wurde, werden im Modul "Strategie" 38 in Abhängigkeit von den auswählbaren Strategien 40, 41, 42, 43, 43a, 44 Einstellparameter 49 vorgeschlagen, die zu adaptieren sind. Hierzu wird bei der vorgegebenen Verwendung von Zusatzausstattung 7 in Form eines Zinkenaufbereiters oder eines Walzenaufbereiters sowie zusätzlichen an dem zumindest einen Scheibenmähwerk 3, 4 angeordneten einstellbaren Leitblechen, schwenkbaren Schwadscheiben und/oder angetriebenen Fördertrommeln, im Einstellschritt 95 "Ausrüstung des Anbaugerätes" nach der Zielstellung des Einsatzes der Zusatzausstattung 7 durch das Fahrerassistenzsystem 21 gefragt. Dies gilt gleichermaßen auch für Scheibenmähwerke 4 ohne Zusatzausstattung in Form eines Zinkenaufbereiters oder eines Walzenaufbereiters, wobei an den Scheibenmähwerken 4 schwenkbare Schwadscheiben angeordnet sein können, welche der gleichmäßigen Verteilung des Mähgutes über die Arbeitsbreite des Scheibenmähwerkes 3, 4 dienen. Dies kann auch Bestandteil des Einzelmodules 39c "Arbeitsziel" sein.

Eine weitere Abfrage innerhalb des Moduls "Strategie" 38 kann mit einer auszuwählenden Zielarbeitsweise für die Schwadablage verknüpft sein. Auch dies kann Bestandteil des Einzelmodules 39c "Arbeitsziel" sein. Die möglichen Zielarbeitsweisen für die Schwadablage werden der Bedienperson 37 in Abhängigkeit von der Anzahl, Anordnung und Größe des oder der Scheibenmähwerke 4 an der Arbeitsmaschine 2 durch die Anzeige- und Bedieneinheit 23 visualisiert und zur Auswahl zur Verfügung gestellt. Dabei kann auch das Vorhandensein von zumindest einer Querfördervorrichtung 9 berücksichtigt werden, welche die Anzahl an realisierbaren Zielarbeitsweisen der Schwadablage beeinflusst. Vorzugsweise kann die Bedienperson 37 bei der Auswahl der Zielarbeitsweise für die Schwadablage mittels zusätzlicher Hinweise auf Vor- und Nachteile der jeweiligen Zielarbeitsweise bei der Entscheidungsfindung unterstützt werden, welche von der Anzeige- und Bedieneinheit 23 im Kontext mit den verfügbaren Zielarbeitsweise für der Schwadablage angezeigt werden.

**Bezugszeichenliste**

| | | | |
|---|---|---|---|
| 1 | Maschinenanordnung | 32 | Regelwerk |
| 2 | Arbeitsmaschine | 33 | Regelwerk |
| 3 | Scheibenmähwerk | 34 | Arbeitsaggregat |
| 4 | Scheibenmähwerk | 35 | Sensorsystem |
| 5 | Schneidorgan | 36 | Steuersignal |
| 6 | Mähbalken | 37 | Bedienperson |
| 7 | Zusatzausstattung | 38 | Modul "Strategie" |
| 8 | Schwad | 39 | Modul "Einstellungen" |
| 9 | Querfördervorrichtung | 39a | Einzelmodul "Maschinendaten" |
| 10 | Hubwerk | 39b | Einzelmodul "Basiseinstellungen" |
| 11 | Hubwerk | 39c | Einzelmodul "Arbeitsziel" |
| 11a | Oberlenker | 40 | Strategie "Effizienz" |
| 11b | Unterlenker | 41 | Strategie "Leistung" |
| 12 | Vorderachse | 42 | Strategie "Qualität" |
| 13 | Hinterachse | 43 | Strategie "Bodenschonung" |
| 14 | Vorderräder | 43a | Strategie "Kosten" |
| 15 | Hinterräder | 44 | Strategie "Benutzerdefiniert" |
| 16 | Antriebsmotor | 45 | gerätespezifische Betriebsparameter |
| 17 | Getriebe | 46 | Herstellerspezifischer Basisdatensatz |
| 18 | Nebenabtriebswelle | 47 | Bedienerspezifische Basisdatensatz |
| 19 | Steuereinrichtung | 48 | gerätespezifische Maschinenparameter |
| 20 | Bedien- und Anzeigeeinheit | 49 | Einstellparameter |
| 21 | Fahrerassistenzsystem | 50 | Datenbank |
| 22 | Recheneinheit | 50a | Anbaugerätedatenbank |
| 23 | Bedien- und Anzeigeeinheit | 50b | Reifendatenbank |
| 24 | Interne Informationen | 51 | Verfahrensschritt |
| 25 | Externe Informationen | 52 | Verfahrensschritt |
| 26 | Hinterlegbare Informationen | 52a | Verfahrensschritt |
| 27 | Datenverarbeitungsvorrichtung | 53 | Verfahrensschritt |
| 28 | Steuereinrichtung | 54 | Verfahrensschritt |
| 29 | Arbeitsaggregat | 55a | Verfahrensschritt |
| 30 | Arbeitsmaschineneinstellautomat | 55 | Verfahrensschritt |
| 31 | Scheibenmähwerkeinstellautomat | 56 | Verfahrensschritt |
| 31a | Gemeinsamer Einstellautomat | 57 | Verfahrensschritt |
| 58 | Verfahrensschritt | 79 | Dialogfeld |
| 58a | Verfahrensschritt | 80 | Piktogramm/Icon |
| 58b | Verfahrensschritt | 81 | Teilbereich |
| 59 | Verfahrensschritt | 82 | Teilbereich |
| 60 | Erste Bedien- und Anzeigeebene | 83 | Teilbereich |
| 61 | Visualisierungsbereich | 84 | Anzeigefeld |
| 61a | Hauptmenüebene | 85 | Marker |
| 62a | Menüebene | 86 | Piktogramm/Icon |
| 63 | Visualisierungsbereich | 87 | Symbol |
| 63a | Submenüebene | 88 | Auswahloption |
| 64 | Hauptmenüpunkt | 89 | Einstelloption |
| 65 | Menüpunkt | 90 | Einstelloption |
| 66 | Submenüpunkt | 91 | Piktogramm/Icon |
| 67 | Menüband | 92 | Piktogramm/Icon |
| 67a | Darstellabschnitt | 93 | Zusatzfeld |
| 67b | Informationsfeld | 94 | Segment |
| 68 | Auswahloption | 95 | Einstellschritt |
| 69 | Einstelloption | 96 | Richtungspfeil |
| 70 | Bedienoption | 97 | Richtungspfeil |
| 71 | Auswahlindikator | 98 | Anzeigesegment |
| 72 | Zweite Bedien- und Anzeigeebene | 99 | Grafische Darstellung |
| 73 | Einstell- und Visualisierungsbereich | 100 | Grafische Darstellung |
| 73a | Kontextfeld | | |
| 74 | Löschoption | AM | Automatikmodus |
| 75 | Piktogramm/Icon | DM | Dialogmodus |
| 76 | Piktogramm/Icon | FR | Fahrtrichtung |
| 77 | Piktogramm/Icon | I_{An} | Ausgangssignal |
| 78 | Assistent | I_{En} | Eingangssignal |

## Patentansprüche

1. Verfahren zum Betreiben einer landwirtschaftlichen Maschinenanordnung (1), bestehend aus zumindest einer landwirtschaftlichen Arbeitsmaschine (2), welche zur Einstellung von Betriebsparametern der Arbeitsmaschine (2) angesteuerte Arbeitsaggregate (3, 4) aufweist, und zumindest einem an die Arbeitsmaschine (2) adaptierten Anbaugerät (3, 4), welches eine Schnittstelle zur Adaption an die Arbeitsmaschine (2) aufweist, wobei der Betrieb der Maschinenanordnung (1) durch ein Fahrerassistenzsystem (21) optimiert wird, welches über eine Recheneinheit (22) und zumindest eine Bedien- und Anzeigeeinheit (20, 23) verfügt, wobei von der Recheneinheit (22) von maschineninternen Sensorsystemen (35) generierte Informationen (24), externe Informationen (25) und in der Recheneinheit (22) hinterlegbare Informationen (26) verarbeitet werden und wobei die Arbeitsmaschine (2) und/oder das zumindest eine Anbaugerät (3, 4) eine Steuereinrichtung (19, 28) umfassen, mittels der die Arbeitsmaschine (2) und/oder das Anbaugerät (3, 4) gesteuert oder geregelt werden, **dadurch gekennzeichnet, dass** das Fahrerassistenzsystem (21) so strukturiert ist, dass ein Arbeitsmaschineneinstellautomat (30) und ein Anbaugeräteeinstellautomat (31) gebildet werden, wobei die jeweiligen Einstellautomaten (30, 31) in Abhängigkeit voneinander eine Optimierung der Arbeitsweise der Arbeitsmaschine (2) und des zumindest einen Anbaugerätes (3, 4) bewirken, wobei durch das Fahrerassistenzsystem (21) ein ausführbares Modul "Strategie" (38) und ein Modul "Einstellungen" (39) bereitgestellt wird, wobei die Ausführbarkeit des Moduls "Strategie" (38) in Abhängigkeit von der zumindest einmaligen Ausführung des Moduls "Einstellungen" (39) bewirkt wird.

2. Verfahren nach Anspruch 1, **dadurch gekennzeichnet, dass** mit der Aktivierung des Fahrerassistenzsystems (21) automatisch das Modul "Einstellungen" (39) aktiviert wird.

3. Verfahren nach Anspruch 1 oder 2, **dadurch gekennzeichnet, dass** das Modul "Einstellungen" (39) Einzelmodule "Maschinendaten" (39a), "Basiseinstellungen" (39b) und "Arbeitsziel" (39c) umfasst.

4. Verfahren nach einem der vorangehenden Ansprüche, **dadurch gekennzeichnet, dass** die Abarbeitung des Moduls "Strategie" (38) und des Moduls "Einstellungen" (39) mittels eines interaktiven natürlichsprachigen Dialogs zwischen einer Bedienperson (37) der Maschinenanordnung (1) und dem Fahrerassistenzsystem (21) durchgeführt werden.

5. Verfahren nach einem der Ansprüche 1 bis 4, **dadurch gekennzeichnet, dass** durch das Modul "Einstellungen" (39) eine Übersicht von einzelmodulspezifischen Einstellschritten (95) der Maschinenanordnung (1) aus der Gruppe "Gerätedetails", "Arbeitsbedingungen", "Reifeneinstellung", "Ballastierungsempfehlung", "Reifendruckempfehlung" , "Ernteguttyp", "Vorbereitung auf dem Hof", "Vorbereitung auf dem Feld", "Arbeitsstrategieeinstellungen", "Gerätedetails", "Aufgabe", "Typ", "Ankuppelpunkt und Ankuppelart", "Gewichtsbestimmung", "Ausrüstung des Anbaugerätes" vorgegeben wird.

6. Verfahren nach Anspruch 5, **dadurch gekennzeichnet, dass** als ein Verfahrensschritt des Moduls "Einstellungen"" (39) eine Konfiguration des Anbaugerätes (3, 4) bestimmt wird.

7. Verfahren nach Anspruch 5 oder 6, **dadurch gekennzeichnet, dass** als ein Verfahrensschritt des Moduls Einstellungen (39) der Einsatzbereich des Anbaugerätes (3, 4) und die Einsatzkonditionen bestimmt werden.

8. Verfahren nach einem der Ansprüche 5 bis 7, **dadurch gekennzeichnet, dass** als ein Verfahrensschritt des Moduls "Einstellungen" (39) Einstellparameter (49) bestimmt werden, die vor dem Erreichen eines abzuarbeitenden Feldes eingestellt werden, und dass als ein Verfahrensschritt des Moduls "Einstellungen" (39) Einstellparameter (49) bestimmt werden, die auf einem abzuarbeitenden Feld eingestellt werden.

9. Verfahren nach einem der vorangehenden Ansprüche, **dadurch gekennzeichnet, dass** als ein Verfahrensschritt des Moduls "Einstellungen" (39) das Anlegen einer neuen und/oder das Auswählen einer bestehenden Maschinenanordnung (1) als ein Einstellparameter (49) durchgeführt wird.

10. Verfahren nach Anspruch 9, **dadurch gekennzeichnet, dass** bei der Ausführung des Modul "Einstellungen" (39) als Grundeinstellung der neu angelegten oder ausgewählten bestehenden Maschinenanordnung (1) spezifische Angaben zu dem zumindest einen Anbaugerät (3, 4) als Einstellparameter (49) abgefragt werden.

11. Verfahren nach Anspruch 10, **dadurch gekennzeichnet, dass** als spezifische Angaben der Hersteller und der Typ des zumindest einen Anbaugerätes (3, 4) abgefragt werden.

12. Verfahren nach Anspruch 11, **dadurch gekennzeichnet, dass** die spezifischen Abgaben zum Hersteller und Typ des zumindest einen Anbaugerätes (3, 4) aus einer in der Recheneinheit (21) hinterlegten Datenbank (50, 55) oder einer externen Datenbank zur Auswahl abgerufen werden.

13. Verfahren nach Anspruch 11 oder 12, **dadurch gekennzeichnet, dass** in Abhängigkeit vom Typ des zumindest einen Anbaugerätes (3, 4) die Arbeitsbreite des zumindest einen Anbaugerätes (3, 4), die Art der Schnittstelle zur Adaption an die Arbeitsmaschine (2), die Position des zumindest einen Anbaugerätes (3, 4) an der Arbeitsmaschine (2) und/oder das Vorhandensein von Zusatzausstattung (7, 9) und die Art der Zusatzausstattung (7, 9) an dem zumindest einen Anbaugerät (3, 4) als Einstellparameter (49) abgefragt wird.

14. Verfahren nach einem der Ansprüche 7 bis 13, **dadurch gekennzeichnet, dass** als ein Verfahrensschritt des Modules "Einstellungen" (39) eine Abfrage zur Auswahl eines landwirtschaftlichen Arbeitsauftrages durch das Fahrerassistenzsystem (21) durchgeführt wird.

15. Verfahren nach einem der vorangehenden Ansprüche, **dadurch gekennzeichnet, dass** eine Bestimmung des Standortes und/oder des Betriebszustandes der Maschinenanordnung (1) durchgeführt wird.

16. Verfahren nach Anspruch 15, **dadurch gekennzeichnet, dass** in Abhängigkeit vom bestimmten Standort und/oder dem Betriebszustand einzustellende Einstellparameter (49) für die Arbeitsmaschine (2) und/oder das zumindest eine Anbaugerät (3, 4) durch das Fahrerassistenzsystem (21) bestimmt und vorgegeben werden, welche für die Dauer zumindest eines landwirtschaftlichen Arbeitsvorganges unverändert bleiben.

17. Verfahren nach einem der Ansprüche 13 bis 16, **dadurch gekennzeichnet, dass** zumindest eine zu erreichende Zielarbeitsweise bei der Verwendung von einer Zusatzausstattung (7, 9) abgefragt und in Abhängigkeit von der Auswahl einer Zielarbeitsweise für die Zusatzausstattung (7, 9) und/oder die Arbeitsmaschine (2) zumindest ein Einstellparameter (49) durch das Fahrerassistenzsystem (21) bestimmt und vorgegeben wird.

18. Verfahren nach einem der vorangehenden Ansprüche, **dadurch gekennzeichnet, dass** eine Aktivierung einer Belegungszuordnung von Funktionen des zumindest einen Anbaugerätes (3, 4) zur Auswahl gestellt wird, und dass bei der Auswahl der Aktivierung die Belegungszuordnung für zumindest eine separate Bedienvorrichtung der Arbeitsmaschine (2), die mehrere manuell zu betätigende Bedienelemente umfasst, durch das Fahrerassistenzsystem (21) vorgeschlagen wird.

19. Verfahren nach einem der vorangehenden Ansprüche, **dadurch gekennzeichnet, dass** durch die zumindest eine Bedien- und Anzeigeeinheit (20, 23) in einer ersten Bedien-und Anzeigeebene (60) zumindest drei nebeneinander angeordnete Visualisierungsbereiche (61, 62, 63) dargestellt werden, die in der ersten Bedien- und Anzeigeebene (60) hierarchisch absteigend positioniert werden, wobei die Darstellungsgröße des jeweiligen Visualisierungsbereich (61, 62, 63) hierarchisch absteigend zunimmt, und dass in einer zweiten Bedien- und Anzeigeebene (72) die beiden hierarchisch höherstehenden Visualisierungsbereiche (61, 62) durch einen Einstell- und Visualisierungsbereich (73) gemäß einer zuvor im hierarchisch niedrigsten Visualisierungsbereich (63) getroffenen Auswahl überlagert werden, wobei der Einstell- und Visualisierungsbereich (73) der zweiten Bedien- und Anzeigeebene (72) der Auswahl und/oder Einstellung von Einstellparametern (49) dient.

20. Landwirtschaftliche Maschinenanordnung, **dadurch gekennzeichnet, dass** die Maschinenanordnung zur Durchführung des Verfahrens nach einem der vorangehenden Ansprüche 1 bis 19 eingerichtet ist.
